# EUROPEAN PATENT APPLICATION

(11) **EP 4 645 778 A1**
(43) Date of publication of application: **05.11.2025**
(21) Application number: 22969824.6
(22) Date of filing: 30.12.2022
(51) Int. Cl.: H04L 27/00

(54) **ZERO-POWER COMMUNICATION METHOD AND APPARATUS, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Novagraaf Technologies
(86) International application number: PCT/CN2022/144154
(87) International publication number: WO 2024/138682

(57) **Abstract**

The present application relates to the field of wireless communications. Disclosed are a zero-power communication method and apparatus, and a device and a medium. The method is executed by a zero-pow device. The method comprises: sending a communication signal by means of a first sending mode, wherein the first sending mode refers to communication initiated by a zero-power device, and the communication signal comprises identity information of the zero-power device (220).

## Description

### TECHNICAL FIELD

The present disclosure relates to the technical field of wireless communications, and in particular, relates to a method and apparatus for zero-power communication, and a device and a medium thereof.

### RELATED ART

Zero-power devices have low complexity and costs and may be maintenance-free and battery-free. Zero-power devices are categorized into passive zero-power terminals, semi-passive zero-power terminals, active zero-power terminals, or the like. A zero-power device acquires power for communication by harvesting energy (such as radio frequency (RF) energy, optical energy, thermal energy, mechanical energy, and kinetic energy) from the environment. In terms of the communication mode, backscattering is supported, or active transmission is further supported.

Zero-power devices may be deployed in high density and large scale at lower costs. Moreover, because the zero-power devices may be maintenance-free and battery-free, the zero-power devices have a great prospect for application in industrial sensor networks, smart homes, smart agricultures, logistics and warehousing, smart wearables, healthcare, and the like. The zero-power device may be combined with a sensor device to implement environment monitoring and processing, danger warning, alerting, and the like.

A zero-power device needs to utilize the energy harvested from the environment for communication, and in a case where the charging efficiency is low (e.g., in a case where the energy in the environment is unstable, the zero-power device is located at an edge of a power sourcing network, or the received RF signal has low strength), unlike a traditional terminal with a battery, the zero-power device generally may not have enough energy to support a plurality of communication attempts in a short period of time (e.g., a plurality of repeated transmissions or hybrid automatic repeat request (HARQ) retransmissions) to finally complete data transmission successfully. Therefore, how to efficiently utilize the harvested energy for communication is an issue to be considered.

### SUMMARY

Embodiments of the present disclosure provide a method and apparatus for zero-power communication, and a device and a medium thereof. The technical solutions are as follows.

According to an aspect of the embodiments of the present disclosure, a method for zero-power communication is provided. The method is applicable to a zero-power device, and the method includes: transmitting a communication signal using a first transmission mode, wherein in the first transmission mode, communication is initiated by the zero-power device, and the communication signal includes identity information of the zero-power device.

According to an aspect of the embodiments of the present disclosure, a method for zero-power communication is provided. The method is applicable to a network device, and the method includes: receiving a communication signal from a zero-power device, wherein the communication signal is transmitted by the zero-power device using a first transmission mode, and in the first transmission mode, communication is initiated by the zero-power device, and the communication signal includes identity information of the zero-power device.

According to an aspect of the embodiments of the present disclosure, an apparatus for zero-power communication is provided. The apparatus includes: a first transmitting module, configured to transmit a communication signal using a first transmission mode, wherein in the first transmission mode, communication is initiated by a zero-power device, and the communication signal includes identity information of the zero-power device.

According to an aspect of the embodiments of the present disclosure, an apparatus for zero-power communication is provided. The apparatus includes: a second receiving module, configured to receive a communication signal from a zero-power device, wherein the communication signal is transmitted by the zero-power device using a first transmission mode, and in the first transmission mode, communication is initiated by the zero-power device, and the communication signal includes identity information of the zero-power device.

According to an aspect of the embodiments of the present disclosure, a terminal is provided. The terminal includes a transceiver; wherein the transceiver is configured to transmit a communication signal using a first transmission mode, wherein in the first transmission mode, communication is initiated by the zero-power device, and the communication signal includes identity information of the zero-power device.

According to an aspect of the embodiments of the present disclosure, a network device is provided. The network device includes a transceiver; wherein the transceiver is configured to receive a communication signal from a zero-power device, wherein the communication signal is transmitted by the zero-power device using a first transmission mode, and in the first transmission mode, communication is initiated by the zero-power device, and the communication signal includes identity information of the zero-power device.

According to an aspect of the embodiments of the present disclosure, a computer-readable storage medium is provided. The computer-readable storage medium stores at least one executable instruction therein, wherein the at least one executable instruction, when loaded and run by a processor, causes the processor to perform the method for zero-power communication as described above.

According to an aspect of the embodiments of the present disclosure, a chip is provided. The chip includes at least one programmable logic circuit and/or at least one program instruction, wherein the chip, when running on a computer device, is used to perform the method for zero-power communication as described above.

According to an aspect of the embodiments of the present disclosure, a computer program product is provided. The computer program product, when running in a processor of a computer device, causes the computer device perform method for zero-power communication as described above.

The technical solutions according to the embodiments of the present disclosure achieve at least the following beneficial effects.

The zero-power device is capable of actively initiating communication with the network device. In a case where the zero-power device needs to transmit data to the network device, the zero-power device is capable of initiating communication by itself to transmit data to the network device, without waiting for scheduling from the network device, such that the data transmission performance of the zero-power device is improved, the data transmission delay is reduced, and the collisions between different terminals in transmitting signals are reduced.

### BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description illustrate merely some embodiments of the present disclosure, and those of ordinary skill in the art may still derive other drawings from these accompanying drawings without creative efforts.
FIG. 1 is a schematic diagram of a zero-power communication system according to some embodiments of the present disclosure;
FIG. 2 is a schematic diagram of principles for backscattering communication according to some embodiments of the present disclosure;
FIG. 3 is a schematic diagram of principles for energy harvesting according to some embodiments of the present disclosure;
FIG. 4 is a schematic diagram of circuit principles for resistive load modulation according to some embodiments of the present disclosure;
FIG. 5 is a flowchart of a method for zero-power communication according to some embodiments of the present disclosure;
FIG. 6 is a flowchart of a method for zero-power communication according to some embodiments of the present disclosure;
FIG. 7 is a flowchart of a method for zero-power communication according to some embodiments of the present disclosure;
FIG. 8 is a schematic diagram of a method for zero-power communication according to some embodiments of the present disclosure;
FIG. 9 is a flowchart of a method for zero-power communication according to some embodiments of the present disclosure;
FIG. 10 is a schematic diagram of a method for zero-power communication according to some embodiments of the present disclosure;
FIG. 11 is a flowchart of a method for zero-power communication according to some embodiments of the present disclosure;
FIG. 12 is a flowchart of a method for zero-power communication according to some embodiments of the present disclosure;
FIG. 13 is a schematic diagram of a method for zero-power communication according to some embodiments of the present disclosure;
FIG. 14 is a structural block diagram of an apparatus for zero-power communication according to some embodiments of the present disclosure;
FIG. 15 is a structural block diagram of an apparatus for zero-power communication according to some embodiments of the present disclosure; and
FIG. 16 is a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

Hereinafter, the terms involved in the embodiments of the present disclosure are briefly described firstly.

In recent years, zero-power devices have been used more and more widely.

One of the typical zero-power devices is a RF identification (RFID) tag, which utilizes spatial coupling of RF signals to achieve automatic transmission and identification of tag information without contact. RFID tags are also known as "RF tags" or "electronic tags". According to the different ways of power supply, the types of electronic tags are divided into active electronic tags, passive electronic tags, and semi-passive electronic tags. Active electronic tags, also known as active tags, indicate that the work energy of the electronic tags is provided by the battery. The battery, memory, and antenna together constitute the active electronic tag. Different from the activation mode of passive RF, the information is transmitted on a defined frequency band prior to the replacement of the battery. Passive electronic tags, also known as passive electronics, do not support the internal battery. When the passive electronic tag closes to a reader/writer, the tag is in a near-field range formed by radiation of an antenna of the reader/writer, an antenna of the electronic tag produces an inductive current through the electromagnetic induction, the inductive current drives a chip circuit of the electronic tag, and the chip circuit transmits identification information stored in the tag to the reader/writer over the antenna of the electronic tag. Semi-active electronic tags inherit the advantages of small size, light weight, low price, and long service life of passive electronic tags. The built-in battery, in the absence of reader/writer access, only supplies power to very few circuits within the chip, and the built-in battery supplies power to the RFID chip only when the reader/writer is accessed, such that the reading and writing distance of the tag is increased, and thus the reliability of communication is improved.

RFID is a wireless communication technology. The most basic RFID system is composed of two parts: the electronic tag and the reader/writer. The electronic tag consists of coupling components and chips, and each electronic tag has a unique electronic code, which is placed on a target object to be measured to mark the target object. Reader/writer is not only capable of reading the information on the electronic tag, but also capable of writing the information on the electronic tag, and at the same time provides the energy needed for communication for the electronic tag. Upon entering the electromagnetic field, the electronic tag receives RF signals from the reader/writer. The passive electronic tag or the passive tag transmits the information stored in the electronic tag using the energy acquired by the electromagnetic field generated in space. The reader/writer reads and decodes the information, and thus the electronic tag is recognized.

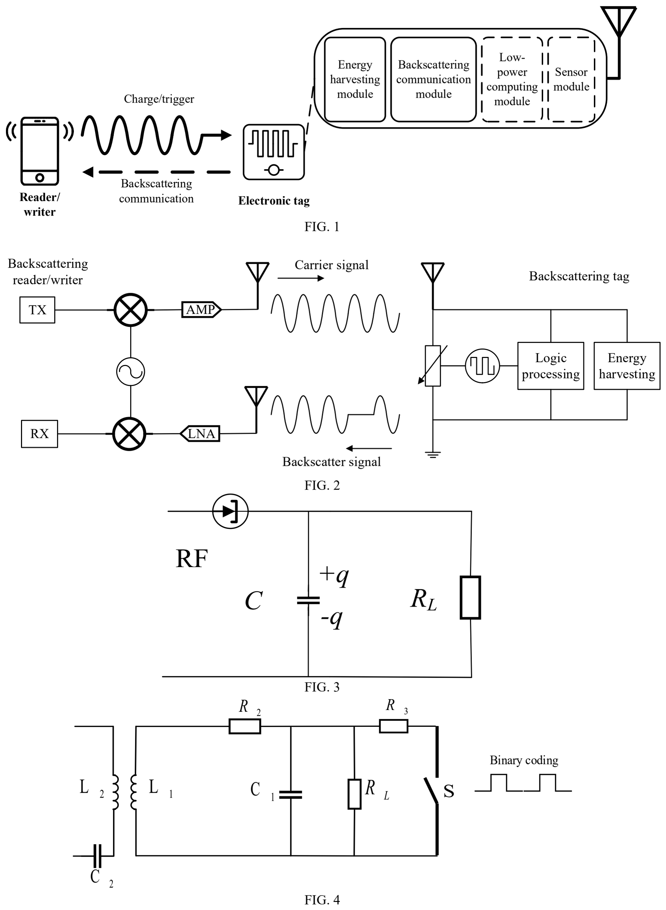

The key techniques of zero-power communication include energy harvesting, backscattering communication, and low-power computing. As illustrated in FIG. 1, a typical zero-power communication system includes a reader/writer and a zero-power device (i.e., an electronic tag in the figure). The reader/writer transmits radio waves to provide energy to the zero-power device. An energy harvesting module installed in the zero-power device collects the energy carried by the radio waves in space (FIG. 1 illustrates the radio wave transmitted by the reader/writer) to drive a low-power computing module of the zero-power device and achieve the backscattering communication. Upon acquiring energy, the zero-power device is capable of receiving control commands from the reader/writer and transmitting data to the reader/writer by backscattering based on the control signaling. The transmitted data comes from the data stored in the zero-power device itself (e.g., identification or pre-written information, such as the production date, brand, and manufacturer of goods). The zero-power device is also loaded with various types of sensors, such that the data collected by various types of sensors is reported based on the zero-power mechanism.

It is understandable that the method for zero-power communication according to the embodiments of the present disclosure is applicable to the zero-power communication system based on the RFID technology as illustrated in FIG. 1, and is also applicable to zero-power communication system in other forms, which is not limited in the embodiments of the present disclosure.

Communication based on the zero-power device is referred to as zero-power communication, which includes the following key techniques.

### Backscattering Communication

FIG. 2 illustrates a schematic diagram of backscattering communication. As illustrated in FIG. 2, the zero-power device (i.e., a backscattering tag in FIG. 2) receives a carrier signal from a backscattering reader/writer and collects energy by a RF power harvesting module. In this way, the zero-power device supplies power to a low-power processing module (a logic processing module in FIG. 2), modulates an incoming signal, and performs backscattering.

### The main features are as follows.

(1) The zero-power device does not actively transmit signals and achieves backscattering communication by modulating incoming signals.
(2) The zero-power device does not rely on a conventional active amplifier transmitter and uses a low-power computing unit, such that the hardware complexity is greatly reduced.
(3) Battery-free communication is achieved by the combination of energy harvesting.

### Energy Harvesting (RF Power Harvesting)

FIG. 3 illustrates a schematic diagram of energy harvesting. As illustrated in FIG. 3, the spatial electromagnetic wave energy is collected using an RF module by electromagnetic induction, such that the driving of load circuits (low-power computing, sensors, and the like) is achieved, and thus battery-free communication is achieved.

### Load Modulation

The load modulation is a method often used by the electronic tag for transmitting data to the reader/writer. The load modulation adjusts an electric parameter of an oscillation circuit of the electronic tag in accordance with the beat of data flow, such that the size and phase of an impedance of the electronic tag are changed accordingly, and thus the process of modulation is completed.

The load modulation technique mainly has two ways, resistance load modulation and capacitance load modulation. In the resistance load modulation, the load is connected in parallel with a resistor, called a load modulation resistor, the resistor is turned on and off according to a clock of the data flow, and the turn-on or turn-off of the switch S is controlled by binary data coding. The circuit schematic of the resistance load modulation is illustrated in FIG. 4. In the capacitance load modulation, the load is connected in parallel with a capacitor, which replaces the load modulation resistor controlled by binary data coding as illustrated in FIG. 4.

### Coding

For data transmitted by the electronic tag, binary "1" and "0" may be represented by using different forms of codes. The RFID system usually uses one of: non-return zero (NRZ) coding, Manchester coding, unipolar return zero coding (URZ), differential binary phase (DBP) coding, Miller coding, or differential coding. In layman's terms, binary "1" and "0" are represented by different pulse signals.

### Power Sourcing Signal and Activation Signal in Zero-Power Communication System

### 1) Power Sourcing Signal

The carrier of the power sourcing signal is a base station, a smart phone, a smart gateway, a charging station, or a micro base station.

In terms of frequency band, a radio wave used for power sourcing is low frequency, medium frequency, or high frequency.

In terms of waveform, a radio wave used for power sourcing is a sine wave, a square wave, a triangular wave, a pulse, or a rectangular wave.

In addition, a radio wave is a continuous wave or a non-continuous wave (i.e., allowing for a certain amount of time interruption).

The power sourcing signal is one of signals specified in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), or a physical broadcast channel (PBCH).

### 2) Activation Signal

The carrier of the activation signal is a base station, a smart phone, or a smart gateway.

In terms of frequency band, a radio wave used for activation is low frequency, medium frequency, or high frequency.

In terms of waveform, a radio wave used for activation is a sine wave, a square wave, a triangular wave, a pulse, or a rectangular wave.

In addition, the radio wave is a continuous wave or a non-continuous wave (i.e., allowing for a certain amount of time interruption).

The activation signal is one of the signals specified in the 3GPP standard, such as an SRS, a PUSCH, a PRACH, a PUCCH, a PDCCH, a PDSCH, a PBCH, or a new signal.

### Cellular Passive IoT

With the increase of applications in the 5G industry, more and more types of connection objects and application scenarios are emerging, and thus higher requirements may be imposed on the price and power consumption of communication terminals. The application of battery-free and low-cost IoT devices becomes a key technology for cellular IoT, such that the type and number of linked terminals of the 5G network are increased, and thus Internet of everything is truly achieved. Passive IoT devices may be based on zero-power devices, e.g., the RFID technology, and are extended on this basis for wide application to the cellular IoT.

### Classification of Zero-Power Terminals

Zero-power terminals may be categorized into the following types based on the source and usage manner of the power of the zero-power terminals.

### 1) Passive Zero-Power Terminal

The zero-power terminal does not need a built-in battery. When the zero-power terminal approaches a network device (such as a reader/writer of an RFID system), the zero-power terminal is in a near-field range formed by radiation of the antenna of the network device. Therefore, the antenna of the zero-power terminal generates an inductive current by electromagnetic induction, wherein the inductive current drives a low-power chip circuit of the zero-power terminal, such that signals on a forward link are demodulated and signals on a reverse link are modulated. For a backscatter link, the zero-power terminal implements signal transmission by backscattering.

Accordingly, the passive zero-power terminal does not need a built-in battery to drive either the forward link or the reverse link, and the passive zero-power terminal is a true zero-power terminal.

The passive zero-power terminal does not need a battery, and the RF circuit and baseband circuit are very simple, for example, some devices such as a low noise amplifier (LNA), a power amplifier (PA), a crystal oscillator, and an analog-to-digital converter (ADC) are not needed. Therefore, the passive zero-power terminal has many advantages such as small size, light weight, low price, and long service life.

The passive zero-power terminal also supports energy harvesting in other manners, and the passive zero-power terminal acquires energy to drive the circuit by harvesting energy (such as optical energy, thermal energy, kinetic energy, and mechanical energy) from the environment to support the communication of the terminal.

### 2) Semi-Passive Zero-Power Terminal

The semi-passive zero-power terminal does not need to be equipped with a traditional battery, but may use an RF power harvesting module to harvest radio wave power or use an energy harvesting module to acquire energy from the environment (such as solar energy, thermal energy, mechanical vibration energy), and stores the harvested energy in an energy storage unit (such as a capacitor). Upon acquisition of the energy, the energy storage unit drives the low-power chip circuit of the zero-power terminal, such that signals on a forward link are demodulated and signals on a reverse link are modulated. For a backscatter link, the zero-power terminal implements signal transmission by backscattering.

Accordingly, the semi-passive zero-power terminal does not need the built-in battery to drive either the forward link or the reverse link. Although the energy stored in the capacitor is actually used during running of the terminal, the energy comes from the radio energy harvested by the energy harvesting module. Therefore, the semi-passive zero-power terminal is also a true zero-power terminal.

The semi-passive zero-power terminal inherits many advantages of the passive zero-power terminal, and thus has many advantages such as small size, light weight, low price and long service life.

### 3) Active Zero-Power Terminal

In some scenarios, the used zero-power terminal may also be an active zero-power terminal, which may be equipped with a built-in battery. The battery is used to drive the low-power chip circuit of the zero-power terminal to demodulate signals on a forward link and modulate signals on a reverse link. However, for a backscatter link, the zero-power terminal implements signal transmission by backscattering. Therefore, the zero power consumption of this terminal is mainly reflected in the fact that the signal transmission on the reverse link does not need the power of the terminal but is implemented by backscattering.

The active zero-power terminal supplies power to the RFID chip by the built-in battery, to increase a read and write range of the tag and improve the reliability of communication. Therefore, the active zero-power terminal may be applied in some scenarios with relatively high requirements on communication range and read delay.

Some zero-power terminals such as semi-passive zero-power terminals and active zero-power terminals have active transmission capabilities, that is, communication on the reverse link may be implemented by active transmission in addition to backscattering.

The zero-power device has a simple structure, low complexity, and low costs, and supports energy harvesting from the environment (such as optical energy, thermal energy, RF energy, mechanical energy, and kinetic energy) to acquire energy required for communication. The zero-power device supports backscatter communication, and some zero-power devices further support an active transmission communication mode. The zero-power device may be combined with a sensor device to implement environment monitoring and processing, danger warning, alerting, and the like.

The zero-power device does not need to be always connected to a network device, and where communication is needed, the zero-power device is scheduled by the network device for communication. In addition, the zero-power device may trigger communication as needed (that is, the communication is not dynamically scheduled by the network device). Some examples are given as follows.
- The zero-power device communicates with the network device periodically, a typical application of which is, for example, that the zero-power device is combined with a sensor device to be applied in scenarios such as environment monitoring and production line monitoring. The zero-power device needs to transmit monitored data to the network device regularly (every once in a while, e.g., every other hour, every other day, every other week, and the like).
- The zero-power device actively communicates with the network device in response to being triggered by an emergency event, a typical application of which is, for example, that the zero-power device is applied to alerting, abnormality monitoring and the like. When the monitored node data is abnormal (e.g., environmental data such as temperature and humidity exceeds a normal threshold, a zero-power device at a fixed location is moved passively, or the like), the zero-power device needs to communicate with the network device timely and actively, instead of waiting for scheduling from the network device for communication.
- The zero-power device performs a schedule-free communication or other communications.

For the case where a zero-power device with low energy harvesting efficiency performs communication that is not scheduled by the network device, such as periodic communication, schedule-free transmission, and communication triggered by an event (e.g., transmission of an alert message and information reporting triggered by a terminal), it is necessary to design a communication method capable of reducing the collisions between terminals, such that the performance of data transmission is improved, and the time delay of data transmission is reduced.

Some embodiments of the present disclosure provide a method for zero-power communication capable of improving the data transmission performance of the zero-power device, reducing the time delay of data transmission (the period from the moment when the zero-power device initiates communication to the moment when data transmission is completed), and reducing the collisions between different terminals in transmitting signals.

Hereinafter, the method for zero-power communication according to the embodiments of the present disclosure is described in further detail.

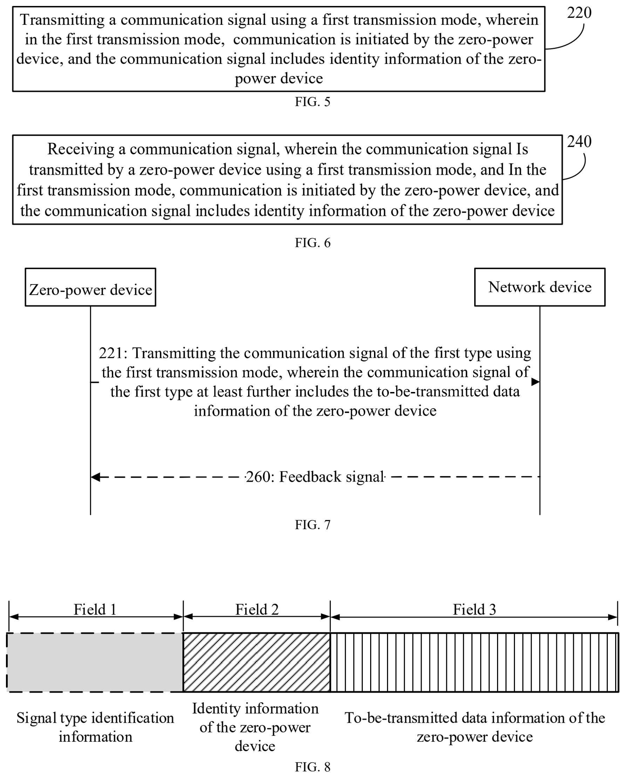

FIG. 5 illustrates a flowchart of a method for zero-power communication according to some embodiments of the present disclosure. The method is applicable to a zero-power device, and the method includes the following process.

**In process 220,** a communication signal is transmitted using a first transmission mode, wherein in the first transmission mode, communication is initiated by the zero-power device, and the communication signal includes identity information of the zero-power device.

The zero-power device is any one of a passive zero-power terminal, a semi-passive zero-power terminal, or an active zero-power terminal.

The zero-power device may support the backscatter communication mode and/or the active transmission communication mode. The zero-power device may be a terminal that only supports the backscatter communication mode, including a passive zero-power terminal, a semi-passive zero-power terminal, and an active zero-power terminal. The zero-power terminal may be a terminal that only supports the energy harvesting and active transmission communication mode but does not support the backscatter communication mode, such as an ambient IoT device.

A network device may be a reader/writer in the zero-power communication system as illustrated in FIG. 1, and may be an access network device or a core network device. For example, the network device may include various forms of a macro base station, a micro base station, a relay station, an access point, or the like. In systems adopting different wireless access technologies, devices having the functions of the access network device may have different names, for example, gNodeB or next generation node B (gNB) in the 5G NR system.

**The first transmission mode:** In the first transmission mode, communication is actively initiated by the zero-power device but dynamical scheduling by the network device is not needed. In some embodiments, the first transmission mode includes active transmission from the zero-power device to the network device, or transmission initiated by the zero-power device, or transmission that is not dynamically scheduled by the network device.

Transmitting the communication signal using the first transmission mode may mean that the zero-power device actively transmits the communication signal, or that the zero-power device transmits the communication signal by actively initiating communication, or that the zero-power device transmits the communication signal without the scheduling from the network device. In some embodiments, the zero-power device actively transmits the communication signal to the network device; or the zero-power device actively initiates communication with the network device, and transmits the communication signal to the network device; or the zero-power device transmits the communication signal to the network device without the dynamical scheduling from the network device.

In some optional embodiments, the first transmission mode includes a periodic communication initiated by the zero-power device based on semi-persistent configuration or semi-persistent scheduling (SPS) of the network device. For example, the zero-power device transmits the communication signal using the first transmission mode over a periodic transmission resource that is semi-persistently scheduled by the network device.

When data transmission is needed, the zero-power device may actively initiate the communication to transmit data to the network device. For example, the zero-power device periodically transmits the communication signal using the first transmission mode, and/or the zero-power device transmits the communication signal using the first transmission mode in response to being triggered by a trigger event, and/or the zero-power device transmits the communication signal using the first transmission mode in a case where a schedule-free communication is performed.

**The communication signal includes identity information.** The communication signal at least includes the identity information of the zero-power device. Because the communication using the first transmission mode is actively initiated by the zero-power device, the identity information of the zero-power device needs to be carried in the transmitted communication signal, such that the network device is capable of identifying the zero-power device that initiates the communication.

The identity information of the zero-power device is used for the network device to identify from which terminal the received communication signal is transmitted. The identity information is information identifying a terminal in the communication system, such as a terminal identity of the zero-power device (e.g., a temporary mobile subscriber identity (TMSI), a radio network temporary identity (RNTI), or the like, assigned by the network device), position information of the zero-power device in the communication system (e.g., node coordinates of the zero-power device), a device ID of the zero-power device in the communication system (e.g., a device ID number of the zero-power device in the deployed system that is assigned by the network device), and a sequence randomly selected by the zero-power device from a predefined sequence resource pool during communication.

**The communication mode for transmitting the communication signal:** The zero-power device may transmit the communication signal using the first transmission mode by backscatter communication mode and/or active transmission communication mode. That is, the communication signal is transmitted using the backscatter communication mode, or the communication signal is transmitted using the active transmission communication mode, or the communication signal is transmitted simultaneously using the backscatter transmission mode and the active transmission communication mode.

**The time domain resource for transmitting the communication signal includes:** any position in a time domain, or a time domain position indicated by network configuration, or a time domain position indicated by pre-configuration, or a time domain position specified in a protocol. For example, the time domain resource for transmitting the communication signal includes a time domain position indicated by semi-persistently scheduled configuration information of the network device.

When data transmission is needed, the zero-power device may actively transmit the communication signal using the first transmission mode immediately. Alternatively, when data transmission is needed, the zero-power device actively transmits the communication signal using the first transmission mode at a preconfigured time domain position, a time domain position configured by a network, or a time domain position specified in a protocol.

### Frequency domain resource for transmitting the communication signal:

In a case where the communication signal is transmitted using the backscatter communication mode, the frequency domain resource for transmitting the communication signal includes at least one of: a frequency domain resource the same as an incoming signal (i.e., direct backscattering) or a frequency domain resource acquired by performing a frequency offset on a frequency domain resource of an incoming signal (i.e., the frequency domain resource of backscattering is different from that of the incoming signal).

In a case where the communication signal is transmitted using the active transmission communication mode, the frequency domain resource for transmitting the communication signal includes a frequency domain resource that is configured by a network, preconfigured, or specified in a protocol.

In a case where the communication signal is transmitted simultaneously using the backscatter communication mode and the active transmission communication mode, the frequency domain resource for transmitting the communication signal by backscattering includes at least one of: a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource that is configured by a network or preconfigured.

In the case where the communication signal is transmitted simultaneously using the backscatter communication mode and the active transmission communication mode, the frequency domain resource for transmitting the communication signal by active transmission includes at least one of: a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource that is configured by a network or preconfigured.

The incoming signal may also be referred to as a carrier signal, and the zero-power device implements the backscattering communication by modulating the incoming signal. The frequency offset value is predefined, implemented depending on the terminal, or configured by a network device (configured before the present communication).

That is, in a case where the communication signal is transmitted simultaneously using the backscatter communication mode and the active transmission communication mode, the frequency domain resources used in the two modes may be the same (the frequency domain resource used for the active transmission is determined based on the frequency domain resource used for backscattering, or the frequency domain resource used for backscattering communication is determined based on the frequency domain resource used for active transmission), or the frequency domain resources used in the two modes may be different (a preconfigured frequency domain resource is used for active transmission, and a frequency domain resource the same as the frequency domain resource of an incoming signal or a frequency domain resource subjected to a frequency offset is used for backscattering) (or, an association relationship is present between the two frequency domain resources, and the frequency domain resource used for backscattering is determined based on a frequency offset configured by a network device or preconfigured according to the frequency domain resource used for active transmission, then implemented by performing a frequency offset on an incoming signal; or the frequency domain resource used for active transmission is determined based on a frequency offset configured by a network device or preconfigured according to the frequency domain resource used for backscattering).

In summary, in the method according to the embodiments, the zero-power device may actively initiate communication with the network device, or the zero-power device may initiate communication with the network device as needed. For example, the zero-power device may periodically communicate with the network device, or the zero-power device may actively communicate with the network device when an emergency event occurs (when abnormal data, alerting or the like is monitored), or the zero-power device may implement a schedule-free communication, such that the data transmission performance of the zero-power device is improved, reducing the data transmission delay is reduced, and the collisions between different terminals in transmitting signals are reduced.

FIG. 6 illustrates a flowchart of a method for zero-power communication according to some embodiments of the present disclosure. The method is applicable to a network device, and the method includes the following process.

**In process 240,** a communication signal from a zero-power device is received, wherein the communication signal is transmitted by the zero-power device using a first transmission mode, and in the first transmission mode, communication is initiated by the zero-power device, and the communication signal includes identity information of the zero-power device.

In some embodiments, the communication signal is periodically transmitted by the zero-power device using the first transmission mode. For example, when the zero-power device performs monitoring tasks such as environment monitoring and production monitoring, the zero-power device transmits the monitored data by periodically transmitting the communication signal to the network device using the first transmission mode.

Alternatively, the communication signal is transmitted by the zero-power device using the first transmission mode in response to being triggered by a trigger event. For example, when the zero-power device performs monitoring tasks such as environment monitoring and production monitoring, the zero-power device transmits the communication signal to the network device using the first transmission mode in response to monitoring abnormal data, thereby transmitting alerting messages in time.

Alternatively, the communication signal is transmitted by the zero-power device using the first transmission mode in the case of performing a schedule-free communication.

In summary, in the method according to the present embodiment, the zero-power device may actively initiate communication with the network device, or the zero-power device may initiate communication with the network device as needed. For example, the zero-power device may communicate with the network device periodically, or the zero-power device may actively communicate with the network device when an emergency event occurs (when abnormal data, alerting or the like is monitored), or the zero-power device may implement a schedule-free communication, such that the data transmission performance of the zero-power device is improved, the data transmission delay is reduced, and the collisions between different terminals in transmitting signals are reduced.

Exemplarily, some embodiments of the present disclosure provide three solutions of actively initiating communication by the zero-power device.

In a first solution, the zero-power device transmits information consisting of a plurality of fields to the network device.

In a second solution, the zero-power device transmits a communication request signal to the network device and waits for scheduling from the network device for communication.

In a third solution, the zero-power device transmits a communication indication signal and a data transmission signal to the network device.

The solutions for zero-power communication according to the embodiments of the present disclosure are not limited to the above three solutions, and the following descriptions are merely provided by taking the above three solutions as examples.

### In the first solution, the zero-power device transmits information consisting of a plurality of fields to the network device.

In some embodiments, the communication signal is a communication signal of a first type, wherein the communication signal of the first type includes identity information and to-be-transmitted data information.

FIG. 7 illustrates a flowchart of a method for zero-power communication according to some embodiments of the present disclosure. The method is applicable to a zero-power communication system which includes a zero-power device and a network device. The method includes the following processes.

**In process 221,** the zero-power device transmits the communication signal of the first type using the first transmission mode, wherein the communication signal of the first type at least includes the identity information of the zero-power device and the to-be-transmitted data information of the zero-power device.

The network device receives the communication signal of the first type, wherein the communication signal of the first type is transmitted by the zero-power device using the first transmission mode.

For communication initiated by the zero-power device, such as communication periodically performed by the zero-power device with the network device, communication between the zero-power device and the network device that is trigged by an emergency event, and a schedule-free communication performed by the zero-power device, the zero-power device transmits the communication signal of the first type using the first transmission mode.

**Fields contained in the communication signal of the first type:** the zero-power device does not need to establish a connection with the network device, but directly transmits information consisting of a plurality of fields (the communication signal of the first type) to the network device. The information at least includes:
- a field indicating identity information of the zero-power device; and
- a field indicating to-be-transmitted data information of the zero-power device: data information initiated by the zero-power device for transmission to the network device.

For example, the to-be-transmitted data information is data monitored by the zero-power device, locally stored data, alerting data, or the like.

In addition, the information transmitted by the zero-power device to the network device (the communication signal of the first type) may further include:
- a field indicating signal type identification information (also referred to as signal type indication information), wherein the signal type identification information identifies the first transmission mode (communication actively initiated by the zero-power device), and/or the signal type identification information identifies a type and a signal structure of the communication signal. For example, the signal type identification information identifies the type, signal structure, contained field contents, or the like of the communication signal of the first type. The signal type identification information may be a special sequence, e.g., a sequence acquired through a specific combination of bits 0 and 1, or the signal type identification information may be associated with the first transmission mode and/or the type and signal structure of the communication signal of the first type based on a bit map.

For example, the signal type identification information indicates that the communication signal of the first type is a signal transmitted using the first transmission mode, that is, the communication signal of the first type is a signal actively transmitted by the zero-power device. Alternatively, the signal type identification information identifies that the type of the communication signal of the first type is type 1, and the communication signal of the first type whose type is type 1 includes three fields: the field indicating the identity information of the zero-power device, the field indicating the to-be-transmitted information of the zero-power device, and the field indicating the signal type identification information. The signal type identification information identifies that the type of the communication signal of the first type is type 2, and the communication signal of the first type whose type is type 2 includes four fields: the field indicating the identity information of the zero-power device, the field indicating the to-be-transmitted information of the zero-power device, the field indicating the signal type identification information, and a field indicating a time offset/time window for monitoring a feedback signal.

That is, the communication signal includes the communication signal of the first type, and the communication signal of the first type at least includes: the field indicating the identity information of the zero-power device and the field indicating the to-be-transmitted data information of the zero-power device. In some embodiments, the communication signal of the first type further includes: the field indicating the signal type identification information, wherein the signal type identification information identifies the first transmission mode, or the signal type identification information identifies the type and signal structure of the communication signal.

In some embodiments, in a case where the communication signal of the first type includes the signal type identification information, the signal type identification information is located at the first position of the communication signal of the first type, that is, the signal type identification information is the first field of the communication signal of the first type.

In some embodiments, FIG. 8 illustrates a structure of a signal transmitted by a zero-power device, and FIG. 8 merely illustrates a position relationship among a plurality of fields (the signal type identification information, the identity information of the zero-power device, and the to-be-transmitted data information of the zero-power device), without excluding other position relationships in the present embodiment. In some embodiments, in the case where the communication signal of the first type includes the signal type identification information, the signal type identification information is located at the start position of the communication signal of the first type.

In some embodiments, a guard period is present between different fields of the communication signal, or no guard period is present between different fields of the communication signal.

**Modulation scheme of the signal:** Different fields of the communication signal of the first type adopt the same coding scheme and/or the same modulation scheme; or different fields of the communication signal adopt different coding schemes and/or different modulation schemes.

In some embodiments, different fields of the communication signal of the first type actively transmitted by the zero-power device to the network device adopt the same coding scheme and the same modulation scheme. In some embodiments, different fields of the communication signal of the first type adopt different coding schemes and different modulation schemes (the signal type identification information and/or the identity information of the zero-power device may adopt a separate coding and modulation scheme, which is different from the coding and modulation scheme of the to-be-transmitted data information). For example, the signal type identification information is transmitted using a sequential mode but does not need to be coded, while the other parts need to be coded (e.g., Manchester coding). The signal type identification information is modulated based on an on-off keying (OKK) modulation scheme, while the other parts are modulated based on a frequency-shift keying (FSK) modulation scheme.

**Transmission mode of the signal:** The communication signal of the first type is transmitted using the backscatter communication mode, or the communication signal of the first type is transmitted using the active transmission communication mode, or the communication signal of the first type is transmitted simultaneously using the backscatter communication mode and the active transmission communication mode.

The communication signal of the first type actively transmitted by the zero-power device to the network device is transmitted using the backscatter communication mode. For example, a radio frequency signal in the environment or a radio frequency signal from the network device (which may be a signal transmitted periodically or a radio frequency signal transmitted by the network device to another terminal) is used as a carrier signal/incoming signal to bear the information that is to be transmitted by the zero-power device to the network device. A zero-power device that supports the active transmission communication mode may transmit a signal using the active transmission communication mode, and a zero-power device that supports the active transmission communication mode may simultaneously transmit a signal using the backscatter communication mode and the active transmission communication mode. Specifically, the signal type identification information and the identity information of the zero-power device is transmitted by active transmission, and the to-be-transmitted data information of the zero-power device is transmitted using the backscatter communication mode.

In some embodiments, a zero-power device that supports the active transmission communication mode transmits at least one of the fields of the signal type identification information, the identity information of the zero-power device, or the to-be-transmitted data information of the zero-power device using the active transmission communication mode, and transmits the remaining fields of the communication signal of the first type using the backscatter communication mode. The zero-power device has limited energy during communication, and for the active transmission communication mode and the backscatter communication mode for the same zero-power device, the data transmission performance in the active transmission communication mode is generally better than the data transmission performance in the backscatter communication mode. Therefore, the more important identity information of the zero-power device is transmitted using a more robust communication mode (the active transmission communication mode) to ensure that the identity information is transmitted as accurately as possible. In this way, even if data information transmitted by backscattering is not successfully transmitted (not all of the data information is transmitted by active transmission due to limited energy), the network device is still capable of scheduling communication based on the identity information.

**Time domain resource for transmitting the signal:** The zero-power device may transmit the communication signal of the first type at any position in a time domain, that is, in the case where the zero-power device needs to transmit the communication signal of the first type, the zero-power device directly transmits the communication signal of the first type to the network device, or the zero-power device transmits the communication signal of the first type at a specified position in the time domain. The position may be configured by the network device for the zero-power device in advance (the position may be a time domain position that is periodically distributed).

In some embodiments, **in process 260,** the network device transmits a feedback signal to the zero-power device, wherein the feedback signal is used to feed back a reception situation of the communication signal of the first type to the zero-power device.

The zero-power device monitors the feedback signal, wherein the feedback signal includes at least one of: the field indicating the identity information of the zero-power device or a field indicating a feature bit in the communication signal from the zero-power device (the communication signal of the first type).

In some embodiments, subsequent to transmitting the communication signal (the communication signal of the first type), the zero-power device monitors the feedback signal based on a time offset or a time window.

The time offset is indicated by the zero-power device to the network device, or the time offset is specified in a protocol, or the time offset corresponds to the identity information of the zero-power device, or the time offset is preconfigured by the network device.

The window length of the time window is indicated by the zero-power device to the network device, or the window length of the time window is specified in a protocol, or the window length of the time window corresponds to the identity information of the zero-power device, or the window length of the time window is preconfigured by the network device. The start position of the time window is specified in a protocol, or the start position of the time window is preconfigured by the network device, or the start position of the time window is a position that is periodically distributed in a time domain, or the start position of the time window is indicated by the zero-power device to the network device.

Monitoring based on the time offset: Subsequent to transmitting a data signal, the zero-power device monitors the feedback signal after a time offset T. The time offset T is indicated by the zero-power device to the network device or specified in a protocol. Alternatively, a plurality of time offsets are present, and the zero-power device and the network device determine a corresponding time offset based on a mapping relationship between the identity information of the zero-power device and the plurality of time offsets.

Monitoring based on the time window: Subsequent to transmitting the to-be-transmitted data information, the zero-power device monitors the feedback signal within a time window (Twindow). The size of the time window is indicated by the zero-power device to the network device or specified in a protocol. Alternatively, a plurality of time window sizes are present, and the zero-power device and the network device determine a corresponding time window based on a mapping relationship between the identity information of the zero-power device and the plurality of time windows.

For example, the zero-power device transmits the communication signal of the first type at a first moment, and monitors the feedback signal from a second moment. The second moment is a moment acquired by offsetting the first moment by a first time. The first time offset is indicated by the zero-power device to the network device over the communication signal of the first type, or the first time offset is determined based on the identity information of the zero-power device. The mapping relationship between the identity information of the zero-power device and the time offsets is predefined in a protocol, and the first time offset corresponding to the identity information of the zero-power device is acquired based on the identity information of the zero-power device.

For another example, the zero-power device transmits the communication signal of the first type at a third moment, and monitors the feedback signal within a first time window. The start position of the first time window is specified in a protocol (for example, it is specified in a protocol that the start position of the first time window is a moment when the third moment is offset by a second time), and the window length of the first time window is indicated by the zero-power device to the network device over the communication signal of the first type.

The zero-power device receives the feedback signal, and determines, based on the feedback signal, whether the network device successfully receives the communication signal of the first type. In the case where the zero-power device determines, based on the feedback signal, that the network device does not successfully receive the communication signal of the first type, the zero-power device retransmits the communication signal of the first type using the first transmission mode; and in the case where the zero-power device determines, based on the feedback signal, that the network device successfully receives the communication signal of the first type, the zero-power device does not need to retransmit the communication signal of the first type.

Subsequent to transmitting data, the zero-power device needs to monitor the feedback from the network device. In the case where the zero-power device receives the feedback signal from the network device, it means that the data is successfully transmitted; and in the case where the zero-power device does not receive the feedback signal, it means that the data is not successfully transmitted.

The feedback signal from the network device includes at least one of:
- the field indicating the identity information of the zero-power device; or
- the field indicating the feature bit in the communication signal from the zero-power device (the communication signal of the first type). For example, the feature bit includes first X bits of the communication signal of the first type or last X bits of the communication signal of the first type, wherein X is a positive integer. For another example, the feature bit includes first Y bits of source bits prior to coding in communication signal of the first type or last Y bits of source bits prior to coding in communication signal of the first type, wherein Y is a positive integer.

In some embodiments, the feedback signal includes the identity information and the feature bit. The identity information indicates that the communication signal fed back by the current feedback signal is transmitted by which terminal, and the feature bit is used to identify whether the communication signal of the first type is successfully received or not.

In some embodiments, the feedback signal includes the identity information, or the feedback signal includes the identity information and the feature bit. The identity information is used to identify whether the communication signal (the communication signal of the first type) is successfully received or not. The zero-power device determines whether the identity information in the feedback signal is consistent with the identity information in the communication signal from the zero-power device. In a case where the identity information in the feedback signal is consistent with the identity information in the communication signal from the zero-power device, the communication signal is successfully received; and in a case where the identity information in the feedback signal is not consistent with the identity information in the communication signal from the zero-power device, the communication signal is not successfully received.

In some embodiments, the feedback signal includes the feature bit, or the feedback signal includes the identity information and the feature bit. The feature bit is used to identify whether the communication signal (the communication signal of the first type) is successfully received or not. The zero-power device determines whether the feature bit in the feedback signal is consistent with the feature bit in the communication signal from the zero-power device. In a case where the feature bit in the feedback signal is consistent with the feature bit in the communication signal from the zero-power device, the communication signal is successfully received; and in a case where the feature bit in the feedback signal is not consistent with the feature bit in the communication signal from the zero-power device, the communication signal is not successfully received.

In a case where the zero-power device does not successfully monitor the feedback signal from the network device, the zero-power device performs retransmission of the communication procedure. In the case where the zero-power device does not successfully monitor the feedback signal, the zero-power device retransmits the communication signal of the first type using the first transmission mode.

In summary, in the method according to the embodiments, the zero-power device may actively initiate communication with the network device, for example, the zero-power device periodically communicates with the network device, or the zero-power device actively communicates with the network device when an emergency event occurs (when abnormal data, alerting or the like is monitored), or the zero-power device may perform a schedule-free communication. The zero-power device may actively transmit the communication signal of the first type to the network device, wherein the communication signal of the first type includes the identity information and the to-be-transmitted data information of the zero-power device. Subsequent to receiving the communication signal of the first type, the network device knows that the communication signal of the first type is transmitted by the zero-power device, and reads the to-be-transmitted data information therein, such that the data transmission performance of the zero-power device is improved, the data transmission delay is reduced, and the collisions between different terminals in transmitting signals are reduced.

**In the second solution, the zero-power device transmits a communication request signal to the network device and waits for scheduling from the network device for communication.**

In some embodiments, the communication signal is a communication signal of a second type, wherein the communication signal of the second type is used to request scheduling from a network device. The communication signal of the second type is also referred to as a communication request signal.

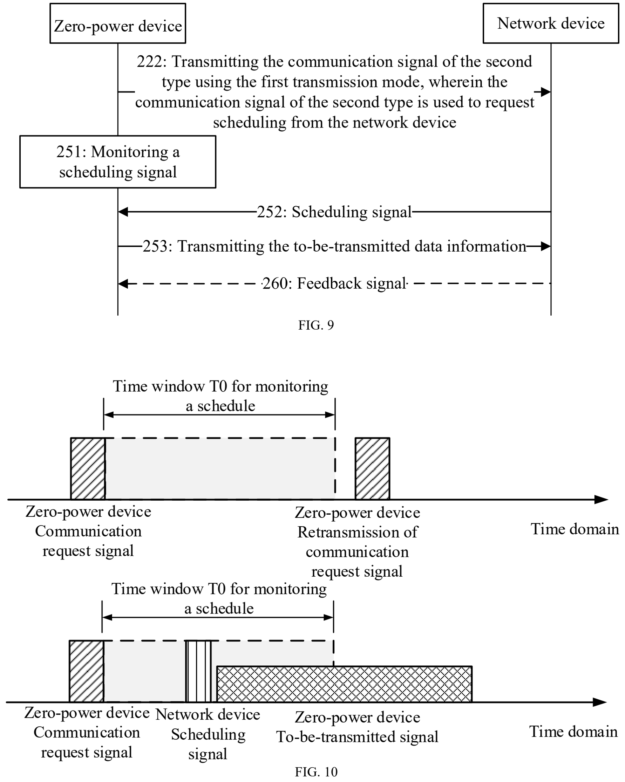

FIG. 9 illustrates a flowchart of a method for zero-power communication according to some embodiments of the present disclosure. The method is applicable to a zero-power communication system which includes a zero-power device and a network device. The method includes the following processes.

**In process 222,** the zero-power device transmits the communication signal of the second type (the communication request signal) using the first transmission mode, wherein the communication signal of the second type is used to request scheduling from a network device.

The network device receives the communication signal of the second type, wherein the communication signal of the second type is transmitted by the zero-power device using the first transmission mode.

The communication signal of the second type is used to request the network device to schedule a transmission resource for the zero-power device.

**Fields contained in the communication signal of the second type:** the communication signal of the second type at least includes: a field indicating identity information of the zero-power device. In some embodiments, the communication signal of the second type further includes at least one of: a field indicating signal type identification information, wherein the signal type identification information identifies the first transmission mode, and/or the signal type identification information identifies a type and a signal structure of the communication signal of the second type; a field indicating communication indication information of the zero-power device, wherein the communication indication information of the zero-power device indicates the type of to-be-transmitted data or the feature of to-be-transmitted data information; or a field indicating a time domain position where a scheduling signal of the network device is expected.

For communication initiated by the zero-power device, such as communication periodically performed by the zero-power device with the network device, communication between the zero-power device and the network device that is trigged by an emergency event, and a schedule-free communication performed by the zero-power device, the zero-power device requests the network device to schedule a transmission resource (e.g., a transmission carrier signal or an energy excitation signal) for the zero-power device by transmitting the communication signal of the second type using the first transmission mode, such that the zero-power device is capable of transmitting the to-be-transmitted data information.

The zero-power device first transmits the communication request signal to the network device, and then waits for scheduling from the network device for subsequent data transmission.

In some embodiments, the communication request signal includes at least one of:
- a field indicating signal type identification information (also referred to as signal type indication information);
- a field indicating identity information of the zero-power device;
- a field indicating communication indication information of the zero-power device, wherein the communication indication information of the zero-power device indicates the type of the to-be-transmitted data information; for example, data of type 1, which is expected to be transmitted within time T1; data of type 2, which is expected to be transmitted within time T2 (T2>T1); data of type 3, which is large packet data, with a transport block size (TBS) greater than a predefined threshold; data of type 4, which is small packet data, with a TBS less than the predefined threshold; and data of type 5, which only supports backscattering transmission, or the like. The indication information is associated with corresponding data types based on bit mapping. For example, '000' represents type 1, '001' represents type 2, and so forth; or
- a field indicating a time domain position where a scheduling signal of the network device is expected, wherein the time domain position where a scheduling signal of the network device is expected is a time domain position where the zero-power device expects to monitor a scheduling signal. For example, a plurality of monitoring configurations, such as a plurality of time domain offset values or a plurality of time window sizes, are preconfigured, and the zero-power device indicates an expected monitoring configuration to the network device by indicating the indexes of the plurality of monitoring configurations. For another example, the zero-power device directly indicates a time domain position, and for example, the value of the field (the time domain position where the scheduling signal of the network device is expected) is X and the time domain offset indicated by this field is X*N, wherein N is a predefined value or a value preconfigured by the network device, and X and N are positive numbers. In some embodiments, N is 1. In some embodiments, the zero-power device subsequently monitors the scheduling signal at a time domain position acquired by adding the time domain offset to the end moment of transmission of the communication request signal.

In some embodiments, a guard period is present between different fields of the communication signal of the second type, or no guard period is present between different fields of the communication signal of the second type.

**Modulation scheme of the signal:** Different fields of the communication signal of the second type adopt the same coding scheme and/or the same modulation scheme; or different fields of the communication signal of the second type adopt different coding schemes and/or different modulation schemes.

**Transmission mode of the signal:** The communication signal of the second type is transmitted using the backscatter communication mode, or the communication signal of the second type is transmitted using the active transmission communication mode, or the communication signal of the second type is transmitted simultaneously using the backscatter communication mode and the active transmission communication mode.

The communication signal of the second type may be transmitted using the backscatter communication mode. For example, a radio frequency signal in the environment or a radio frequency signal from the network device (which may be a signal transmitted periodically or a radio frequency signal transmitted by the network device to another terminal) is used as a carrier signal to bear the communication signal of the second type to be transmitted by the zero-power device. A zero-power device that supports the active transmission communication mode may transmit the communication signal of the second type using the active transmission communication mode.

**Time domain resource for transmitting the signal:** The zero-power device may transmit the communication signal of the second type at any position in a time domain, that is, in the case where the zero-power device needs to transmit the communication request signal, the zero-power device directly transmits the communication request signal to the network device, or the zero-power device transmits the communication signal of the second type at a specified position in the time domain. The position may be configured by the network device for the zero-power device in advance (the position may be a time domain position that is periodically distributed).

**In process 251,** the zero-power device monitors the scheduling signal.

Subsequent to transmitting the communication signal of the second type, the zero-power device monitors the scheduling signal from the network device after a time offset (Toffset) or within a time window.

In some embodiments, subsequent to transmitting the communication signal (the communication signal of the second type), the zero-power device monitors the scheduling signal based on a time offset or a time window.

The time offset is indicated by the zero-power device to the network device (over the communication signal of the second type), or the time offset is specified in a protocol, or the time offset corresponds to the identity information of the zero-power device, or the time offset is preconfigured by the network device, or the time offset is configuration associated with the communication indication information in the communication signal of the second type.

For example, configuration information of a plurality of time offsets is in one-to-one or one-to-many mapping relationship with the types of the to-be-transmitted data information, and when the type of the to-be-transmitted data information is determined based on the communication indication information, the configuration information of one time offset for monitoring scheduling signal of the network device is associated accordingly. For example, the communication indication information in the communication signal of the second type indicates the type of the to-be-transmitted data information is type 1, and accordingly the time offset is a first time offset, and in a case where the zero-power device transmits the communication signal of the second type at a first moment, the zero-power device monitors the scheduling signal at a second moment. The second moment is a moment acquired by offsetting the first moment by a first time.

The window length of the time window is indicated by the zero-power device to the network device (over the communication signal of the second type), or the window length of the time window is specified in a protocol, or the window length of the time window corresponds to the identity information of the zero-power device, or the window length of the time window is preconfigured by the network device, or the window length of the time window is configuration associated with the communication indication information in the communication signal of the second type. The start position of the time window is specified in a protocol, or the start position of the time window is preconfigured by the network device, or the start position of the time window is a position that is periodically distributed in a time domain, or the start position of the time window is indicated by the zero-power device to the network device (over the communication signal of the second type).

**In process 252,** the network device transmits a scheduling signal to the zero-power device.

The zero-power device receives the scheduling signal.

In some embodiments, the network device transmits the scheduling signal at the "time domain position where the scheduling signal of the network device is expected " indicated by the communication signal of the second type, or the network device transmits the scheduling signal at a preconfigured time domain position, a time domain position specified in a protocol, a time domain position configured by a network or a time domain position corresponding to the identity information.

The scheduling signal indicates a transmission resource for transmitting the to-be-transmitted data information. For example, the scheduling signal indicates a time domain position and a frequency domain position for the to-be-transmitted data information.

Alternatively, the scheduling signal indicates at least one of a power sourcing signal, an incoming signal, a frequency offset, or a time domain position for the to-be-transmitted data information. The power sourcing signal supplies power for transmission of the to-be-transmitted data information, the incoming signal is used to transmit the to-be-transmitted data information in the backscatter communication mode, and the frequency offset is used to determine the frequency domain position for the to-be-transmitted data information based on the frequency domain resource of the incoming signal.

**In process 253,** the zero-power device transmits the to-be-transmitted data information based on the scheduling signal.

The network device receives the to-be-transmitted data information.

In some embodiments, the zero-power device transmits the to-be-transmitted data information over the transmission resource indicated by the scheduling signal, or the zero-power device transmits the to-be-transmitted data information and the identity information of the zero-power device over the transmission resource indicated by the scheduling signal.

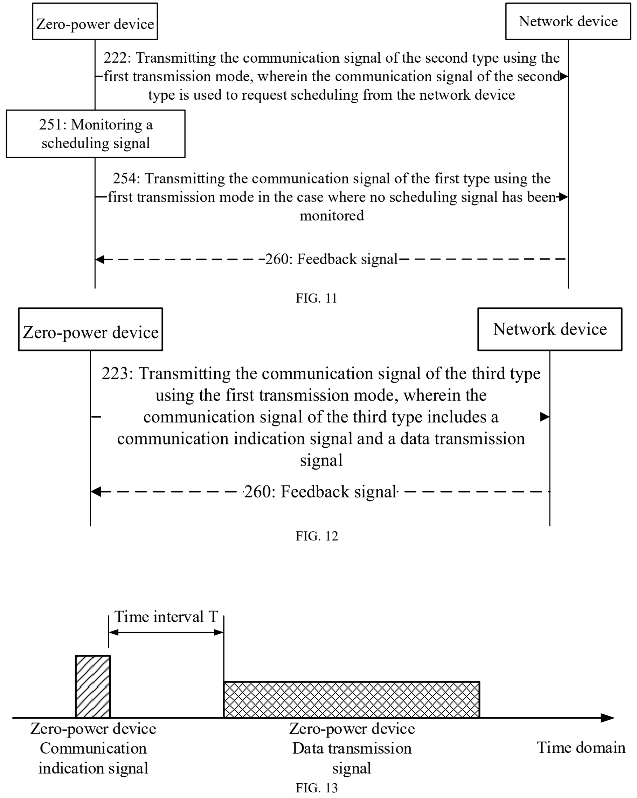

In some embodiments, in the case where the zero-power device does not successfully monitor the scheduling signal, as illustrated in FIG. 11, process 254 is performed after process 251.

**In process 254,** in a case where the zero-power device does not successfully monitor the scheduling signal, the zero-power device transmits the communication signal of the first type using the first transmission mode.

Alternatively, process 254 is replaced with the following: retransmitting the communication signal of the second type using the first transmission mode in the case where the scheduling signal is not successfully monitored; and transmitting the communication signal of the first type using the first transmission mode in a case where the number of retransmissions of the communication signal of the second type satisfies a threshold or the scheduling signal is not successfully monitored within a predefined duration. The communication signal of the first type at least includes: the field indicating the identity information of the zero-power device and the field indicating the to-be-transmitted data information of the zero-power device.

That is, in the case where the zero-power device does not successfully monitor the scheduling signal from the network device, the zero-power device retransmits the communication request signal (the communication signal of the second type), and the data transmission is completed until the zero-power device successfully monitors the scheduling signal from the network device. Taking an example where the zero-power device monitors the scheduling signal of the network device within a time window, as illustrated in FIG. 10, subsequent to transmitting the communication request signal, the zero-power device monitors the scheduling signal within a time window T0. In a case where no scheduling signal has been monitored, the zero-power device retransmits the communication request signal; and in a case where the scheduling signal has been monitored within the time window T0, the zero-power device transmits the to-be-transmitted data information based on the scheduling signal.

In some embodiments, in the case where the zero-power device still does not receive the scheduling signal of the network device subsequent to transmitting the communication request signal for N times, the zero-power device returns to the method in the first solution to perform data transmission directly to transmit the communication signal of the first type to the network device, wherein N is a positive integer.

In some embodiments, **in process 260,** the network device transmits a feedback signal to the zero-power device, wherein the feedback signal is used to feed back the reception situation of the to-be-transmitted data information to the zero-power device.

The zero-power device monitors the feedback signal, wherein the feedback signal includes at least one of: the field indicating the identity information of the zero-power device or the field indicating the feature bit in the to-be-transmitted data information from the zero-power device.

In some embodiments, subsequent to transmitting the to-be-transmitted data information, the zero-power device monitors the feedback signal based on a time offset or a time window.

The time offset is indicated by the zero-power device to the network device, or the time offset is specified in a protocol, or the time offset corresponds to the identity information of the zero-power device, or the time offset is preconfigured by the network device.

The window length of the time window is indicated by the zero-power device to the network device, or the window length of the time window is specified in a protocol, or the window length of the time window corresponds to the identity information of the zero-power device, or the window length of the time window is preconfigured by the network device. The start position of the time window is specified in a protocol, or the start position of the time window is preconfigured by the network device, or the start position of the time window is a position that is periodically distributed in a time domain, or the start position of the time window is indicated by the zero-power device to the network device.

Monitoring based on the time offset: Subsequent to transmitting a data signal, the zero-power device monitors the feedback signal after a time offset T. The time offset T is indicated by the zero-power device to the network device or specified in a protocol. Alternatively, a plurality of time offsets are present, and the zero-power device and the network device determine a corresponding time offset based on a mapping relationship between the identity information of the zero-power device and the plurality of time offsets.

Monitoring based on the time window: Subsequent to transmitting the to-be-transmitted data information, the zero-power device monitors the feedback signal within a time window (Twindow). The size of the time window is indicated by the zero-power device to the network device or specified in a protocol. Alternatively, a plurality of time window sizes are present, and the zero-power device and the network device determine a corresponding time window based on a mapping relationship between the identity information of the zero-power device and the plurality of time windows.

For example, the zero-power device transmits the to-be-transmitted data information at a first moment, and monitors the feedback signal from a second moment. The second moment is a moment acquired by offsetting the first moment by a first time. The first time offset is indicated by the zero-power device over the communication signal of the second type to the network device. Alternatively, the first time offset is determined based on the identity information of the zero-power device. The mapping relationship between the identity information of the zero-power device and the time offsets is predefined in a protocol, and the first time offset corresponding to identity information of the zero-power device is acquired based on the identity information of the zero-power device.

For another example, the zero-power device transmits the to-be-transmitted data information at a third moment, and monitors the feedback signal within a first time window. The start position of the first time window is specified in a protocol (for example, it is specified in a protocol that the start position of the first time window is a moment acquired by offsetting the third moment by a second time), and the window length of the first time window may be indicated by the zero-power device to the network device over the communication signal of the second type.

The zero-power device receives the feedback signal, and determines, based on the feedback signal, whether the network device successfully receives the to-be-transmitted data information. In the case where the zero-power device determines, based on the feedback signal, that the network device does not successfully receive the to-be-transmitted data information, the zero-power device retransmits the to-be-transmitted data information. The scheduling signal indicates a transmission recourse for retransmission of the to-be-transmitted data information. Alternatively, the zero-power device requests the network device to retransmit the scheduling signal and schedule the transmission recourse for retransmission of the to-be-transmitted data information by retransmitting the communication request signal. In the case where the zero-power device determines, based on the feedback signal, that the network device successfully receives the to-be-transmitted data information, the zero-power device does not need to retransmit the to-be-transmitted data information.

Subsequent to transmitting the to-be-transmitted data information, the zero-power device needs to monitor the feedback from the network device. In a case where the zero-power device receives the feedback signal from the network device, the to-be-transmitted data information is successfully transmitted; and in a case where the zero-power device does not receive the feedback signal, the to-be-transmitted data information is not successfully transmitted.

The feedback signal from the network device includes at least one of:
- the field indicating the identity information of the zero-power device; or
- the field indicating the feature bit in the to-be-transmitted data information from the zero-power device. For example, the feature bit includes first X bits of the to-be-transmitted data information or last X bits of the to-be-transmitted data information, wherein X is a positive integer. For another example, the feature bit includes first Y bits of the source bits prior to coding in the to-be-transmitted data information or last Y bits of the source bits prior to coding in the to-be-transmitted data information, wherein Y is a positive integer.

In an embodiment, the feedback signal includes the identity information and the feature bit. The identity information indicates the to-be-transmitted data information fed back by the current feedback signal is transmitted by which terminal, and the feature bit is used to identify whether the to-be-transmitted data information is successfully received or not.

In another embodiment, the feedback signal includes the identity information or the feedback signal includes the identity information and the feature bit. The identity information is used to identify whether the to-be-transmitted data information is successfully received or not. The zero-power device determines whether the identity information in the feedback signal is consistent with the identity information carried in the to-be-transmitted data information from the zero-power device itself. In a case where the identity information in the feedback signal is consistent with the identity information carried in the to-be-transmitted data information from the zero-power device itself, the to-be-transmitted data information is successfully received; and in a case where the identity information in the feedback signal is not consistent with the identity information carried in the to-be-transmitted data information from the zero-power device itself, the to-be-transmitted data information is not successfully received.

In another embodiment, the feedback signal includes the feature bit, or the feedback signal includes the identity information and the feature bit. The feature bit is used to identify whether the to-be-transmitted data information is successfully received or not. The zero-power device determines whether the feature bit in the feedback signal is consistent with the feature bit in the to-be-transmitted data information from the zero-power device itself. In a case where the feature bit in the feedback signal is consistent with the feature bit in the to-be-transmitted data information from the zero-power device itself, the to-be-transmitted data information is successfully received; and in a case where the feature bit in the feedback signal is not consistent with the feature bit in the to-be-transmitted data information from the zero-power device itself, the to-be-transmitted data information is not successfully received.

The zero-power device may monitor the feedback signal from the network device based on a time offset or a time window.

Monitoring based on the time offset: Subsequent to transmitting the to-be-transmitted data information, the zero-power device monitors the feedback signal after a time offset T. The time offset T is indicated by the zero-power device to the network device or specified in a protocol. Alternatively, a plurality of time offsets are present, and the zero-power device and the network device determine a corresponding time offset based on a mapping relationship between the identity information of the zero-power device and the plurality of time offsets.

Monitoring based on the time window: Subsequent to transmitting to-be-transmitted data information, the zero-power device monitors the feedback signal within a time window (Twindow). The size of the time window is indicated by the zero-power device to the network device or specified in a protocol. Alternatively, a plurality of time window sizes are present, and the zero-power device and the network device determine a corresponding time window based on a mapping relationship between the identity information of the zero-power device and the plurality of time windows.

In the case where the zero-power device does not successfully monitor the feedback signal from the network device, the zero-power device performs retransmission of the communication procedure. In the case where the zero-power device does not successfully monitor the feedback signal, the zero-power device retransmits the to-be-transmitted data information.

In summary, in the method according to the embodiments, the zero-power device may actively initiate communication with the network device, for example, the zero-power device may communicate with the network device periodically, or the zero-power device may actively communicate with the network device when an emergency event occurs (when abnormal data, alerting or the like is monitored), or the zero-power device may perform a schedule-free communication. The zero-power device may actively transmit to the network device the communication signal of the second type, which is used to request the scheduling from the network device, monitor the scheduling signal of the network device, and transmit the to-be-transmitted data information to the network device based on the scheduling signal of the network device, such that the data transmission performance of the zero-power device is improved, the data transmission delay is reduced, and the collisions between different terminals in transmitting signals are reduced.

**In the third solution, the zero-power device transmits a communication indication signal and a data transmission signal to the network device.**

In some embodiments, the communication signal is a communication signal of a third type, wherein the communication signal of the third type includes a communication indication signal and a data transmission signal.

FIG. 12 illustrates a flowchart of a method for zero-power communication according to some embodiments of the present disclosure. The method is applicable to a zero-power communication system which includes a zero-power device and a network device. The method includes the following processes.

**In process 223,** the zero-power device transmits the communication signal of the third type using the first transmission mode, wherein the communication signal of the third type includes a communication indication signal and a data transmission signal.

The network device receives the communication signal of the third type, wherein the communication signal of the third type is transmitted by the zero-power device using the first transmission mode. The communication signal of the third type includes the communication indication signal and the data transmission signal.

For communication initiated by the zero-power device, such as communication periodically performed by the zero-power device with the network device, communication between the zero-power device and the network device that is trigged by an emergency event, and a schedule-free communication performed by the zero-power device, the zero-power device transmits the communication indication signal and the data transmission signal using the first transmission mode.

### Fields contained in the communication signal of the first type:

The communication indication signal at least includes the identity information of the zero-power device, and the communication indication signal may further include one of:
- a field indicating signal type identification information (also referred to as signal type indication information), wherein the signal type identification information identifies the first transmission mode, and/or the signal type identification information identifies a type and a signal structure of the communication indication signal, and/or the signal type identification information identifies a type and a signal structure of the data transmission signal;
- a field indicating communication control information of the zero-power device, wherein the communication control information of the zero-power device indicates a transmission configuration for the data transmission signal. The communication control information indicates the configuration information of the zero-power device for transmitting the data transmission signal. For example, there are a plurality of data transmission configurations, which include but are not limited to a coding scheme of data, a modulation scheme of data, data block size, or the like. The communication control information is an index value that indicates the configuration; or
- a field indicating an association relationship between the communication indication signal and the data transmission signal, wherein the association relationship between the communication indication signal and the data transmission signal indicates a time interval between the communication indication signal and the data transmission signal, or indicates a time domain position and/or frequency domain position of the data transmission signal, and is used by the network device to determine the position of the data transmission signal subsequent to receiving the communication indication signal.

The data transmission signal is to-be-transmitted data information that is initiated by the zero-power device and transmitted to the network device.

In some embodiments, a guard period is present between different fields of the communication signal of the third type, or no guard period is present between different fields of the communication signal of the third type.

**Modulation scheme of the signal:** Different fields of the communication signal of the third type adopt the same coding scheme and/or the same modulation scheme; or different fields of the communication signal of the third type adopt different coding schemes and/or different modulation schemes.

**Transmission mode of the signal:** The communication signal of the third type is transmitted using the backscatter communication mode, or the communication signal of the third type is transmitted using the active transmission communication mode, or the communication signal of the third type is transmitted simultaneously using the backscatter communication mode and the active transmission communication mode. The communication indication signal and the data transmission signal may be transmitted using the same communication mode or different communication modes.

The zero-power device may transmit the communication indication signal and the data transmission signal to the network device simultaneously or at different times by stages.

In some embodiments, a time interval is present between the transmission of the communication indication signal and the transmission of the data transmission signal. The time interval is determined based on network configuration, or the time interval is determined based on an agreement in a protocol, or the time interval is determined by the zero-power device (indicated to the network device over the communication indication signal).

For example, as illustrated in FIG. 13, the zero-power device transmits the actively initiated communication indication signal corresponding to the communication and the actively initiated data transmission signal in two stages. For example, the zero-power device transmits the communication indication signal at the end of a first moment, and transmits the data transmission signal at the beginning of a second moment. The time interval T between the first moment and the second moment is specified in a protocol, or configured by a network, or preconfigured, or indicated by the zero-power device over the communication indication signal.

In the case where the time domain position of the data transmission signal is not indicated in the communication indication signal, the time interval between the data transmission signal and the communication indication signal is a predefined value specified in a protocol or is determined by the zero-power device.

In order that the network device is capable of associating the communication indication signal with the data transmission signal, it is necessary to use part or all of the communication indication signal to scramble the data transmission signal. That is, the data transmission signal is acquired by scrambling using part or all of the communication indication signal. Accordingly, subsequent to receiving the communication indication signal, the network device needs to descramble the data transmission signal using part or all of the acquired communication indication signal, thereby associating the communication indication signal with the data transmission signal. The part used for scrambling in the communication indication signal is specified in a protocol, configured by a network, preconfigured, or indicated by the zero-power device over the communication indication signal. For example, the data transmission signal is scrambled using the Identity Information field of the zero-power device in the communication indication signal.

In the case where the network device successfully receives the communication indication signal but does not successfully receive the data transmission signal, the network device may initiate a point-to-point scheduled communication to the zero-power device based on the identity information in the communication indication signal. For example, in a case where the network device does not successfully receive the data transmission signal, the network device transmits a scheduling signal to the zero-power device, and the zero-power device retransmits the data transmission signal based on the transmission resource indicated by the scheduling signal.

The communication indication signal is transmitted using the backscatter communication mode, or the communication indication signal is transmitted using the active transmission communication mode, or the communication indication signal is transmitted simultaneously using the backscatter communication mode and the active transmission communication mode.

The data transmission signal is transmitted using the backscatter communication mode, or the data transmission signal is transmitted using the active transmission communication mode, or the data transmission signal is transmitted simultaneously using the backscatter communication mode and the active transmission communication mode.

**Time domain resource for transmitting the signal:** The zero-power device may transmit the communication signal of the third type at any position in a time domain, that is, in the case where the zero-power device needs to transmit the communication signal of the third type, the zero-power device directly transmits the communication signal of the third type to the network device, or the zero-power device transmits the communication signal of the third type at a specified position in the time domain. The position may be configured by the network device for the zero-power device in advance (the position may be a time domain position that is periodically distributed).

In some embodiments, **in process 260,** the zero-power device transmits a feedback signal to the zero-power device, wherein the feedback signal is used to feed back the reception situation of the data transmission signal.

The zero-power device monitors the feedback signal. The feedback signal includes at least one of: the field indicating the identity information of the zero-power device, or the field indicating the feature bit in the data transmission signal from the zero-power device.

In some embodiments, subsequent to transmitting the data transmission signal, the zero-power device monitors the feedback signal based on a time offset or a time window.

The time offset is indicated by the zero-power device to the network device, or the time offset is specified in a protocol, or the time offset corresponds to the identity information of the zero-power device, or the time offset is preconfigured by the network device.

The window length of the time window is indicated by the zero-power device to the network device, or the window length of the time window is specified in a protocol, or the window length of the time window corresponds to the identity information of the zero-power device, or the window length of the time window is preconfigured by the network device. The start position of the time window is specified in a protocol, or the start position of the time window is preconfigured by the network device, or the start position of the time window is a position that is periodically distributed in a time domain, or the start position of the time window is indicated by the zero-power device to the network device.

Monitoring based on the time offset: Subsequent to transmitting the data transmission signal, the zero-power device monitors the feedback signal after a time offset T. The time offset T is indicated by the zero-power device to the network device or specified in a protocol. Alternatively, a plurality of time offsets are present, and the zero-power device and the network device determine a corresponding time offset based on a mapping relationship between the identity information of the zero-power device and the plurality of time offsets.

Monitoring based on the time window: Subsequent to transmitting the data transmission signal, the zero-power device monitors the feedback signal within a time window (Twindow). The size of the time window is indicated by the zero-power device to the network device or specified in a protocol. Alternatively, a plurality of time window sizes are present, and the zero-power device and the network device determine a corresponding time window based on a mapping relationship between the identity information of the zero-power device and the plurality of time windows.

For example, the zero-power device transmits the data transmission signal at a first moment, and monitors the feedback signal from a second moment. The second moment is a moment acquired by offsetting the first moment by a first time. The first time offset is indicated by the zero-power device over the communication indication signal to the network device. Alternatively, the first time offset is determined based on the identity information of the zero-power device. The mapping relationship between the identity information of the zero-power device and the time offsets is predefined in a protocol, and the first time offset corresponding to the identity information of the zero-power device is acquired based on the identity information of the zero-power device.

For another example, the zero-power device transmits the data transmission signal at a third moment, and monitors the feedback signal within a first time window. The start position of the first time window is specified in a protocol (for example, it is specified in a protocol that the start position of the first time window is a moment acquired by offsetting the third moment by a second time), and the window length of the first time window is indicated by the zero-power device over the communication indication signal to the network device.

The zero-power device receives the feedback signal, and determines, based on the feedback signal, whether the network device successfully receives the data transmission signal. In a case where the zero-power device determines, based on the feedback signal, that the network device does not successfully receive the data transmission signal, the zero-power device retransmits the data transmission signal using the first transmission mode. In a case where the zero-power device determines, based on the feedback signal, that the network device successfully receives the data transmission signal, the zero-power device does not need to retransmit the data transmission signal.

Subsequent to transmitting data, the zero-power device needs to monitor the feedback from the network device. In a case where the zero-power device receives the feedback signal from the network device, the data is successfully transmitted; and in a case where the zero-power device does not receive the feedback signal, the data is not successfully transmitted.

The feedback signal from the network device includes at least one of:
- the field indicating the identity information of the zero-power device; or
- the field indicating the feature bit in the data transmission signal from the zero-power device. For example, the feature bit includes first X bits of the data transmission signal or last X bits of the data transmission signal, wherein X is a positive integer. For another example, the feature bit includes first Y bits of the source bits prior to coding in the data transmission signal or last Y bits of the source bits prior to coding in the data transmission signal, wherein Y is a positive integer.

In some embodiments, the feedback signal includes the identity information and the feature bit. The identity information indicates the communication signal fed back by the current feedback signal is transmitted by which terminal, and the feature bit is used to identify whether the data transmission signal is successfully received or not.

In some embodiments, the feedback signal includes the identity information or the feedback signal includes the identity information and the feature bit. The identity information is used to identify whether the communication signal (data transmission signal) is successfully received or not. The zero-power device determines whether the identity information in the feedback signal is consistent with the identity information in the communication signal from the zero-power device. In a case where the identity information in the feedback signal is consistent with the identity information in the communication signal from the zero-power device, the communication signal is successfully received; and in a case where the identity information in the feedback signal is not consistent with the identity information in the communication signal from the zero-power device, the communication signal is not successfully received.

In some embodiments, the feedback signal includes the feature bit, or the feedback signal includes the identity information and the feature bit. The feature bit identifies whether the communication signal (data transmission signal) is successfully received or not. The zero-power device determines whether the feature bit in the feedback signal is consistent with the feature bit in the communication signal from the zero-power device itself. In a case where the feature bit in the feedback signal is consistent with the feature bit in the communication signal from the zero-power device itself, the communication signal is successfully received; and in a case where the feature bit in the feedback signal is not consistent with the feature bit in the communication signal from the zero-power device, the communication signal is not successfully received.

The zero-power device may monitor the feedback signal from the network device based on a time offset or a time window.

Monitoring based on the time offset: subsequent to transmitting the data transmission signal, the zero-power device monitors the feedback signal after a time offset T. The time offset T is indicated by the zero-power device to the network device or specified in a protocol. Alternatively, a plurality of time offsets are present, and the zero-power device and the network device determine a corresponding time offset based on a mapping relationship between the identity information of the zero-power device and the plurality of time offsets.

Monitoring based on the time window: Subsequent to transmitting the data transmission signal, the zero-power device monitors the feedback signal within a time window (Twindow). The size of the time window is indicated by the zero-power device to the network device or specified in a protocol. Alternatively, a plurality of time window sizes are present, and the zero-power device and the network device determine a corresponding time window based on a mapping relationship between the identity information of the zero-power device and the plurality of time windows.

In a case where the zero-power device does not successfully monitor the feedback signal from the network device, the zero-power device performs retransmission of the communication procedure. In the case where the zero-power device does not successfully monitor the feedback signal, the zero-power device retransmits the data transmission signal.

In summary, in the method according to the embodiments, the zero-power device may actively initiate communication with the network device, for example, the zero-power device may periodically communicate with the network device, or the zero-power device may actively communicate with the network device when an emergency event occurs (when abnormal data, alerting or the like is monitored), or the zero-power device may perform a schedule-free communication. The zero-power device may actively transmit the communication signal of the third type to the network device by stages. The zero-power device first indicates the position and related configuration information of the data transmission signal by transmitting a communication indication signal to the network device, and then transmits the data transmission signal to the network device, such that the data transmission performance of the zero-power device is improved, the data transmission delay is reduced, and the collisions between different terminals in transmitting signals are reduced.

The structure of the communication signal (the structure of the communication signal mentioned in the above three solutions) may be determined based on the energy situation of the zero-power device during data transmission.

In some embodiments, the signal structure of the communication signal is determined based on the amount of stored energy of the zero-power device, the energy harvesting efficiency of the zero-power device, the feature of at least one of a power sourcing signal or an incoming signal, or the signal strength of at least one of a power sourcing signal or an incoming signal. The signal structure includes at least one of: the communication signal being a communication signal of a first type, the communication signal being a communication signal of a second type, or the communication signal including a communication indication signal and a data transmission signal.

For example, the signal structure of the communication signal is determined based on the duty ratio, the waveform or the like of at least one of the power sourcing signal or the incoming signal. In the case where it is determined based on the duty ratio and the waveform that the signal has large energy, the communication signal of the first type or the communication signal of the third type is used.

Taking an example where the signal structure of the communication signal is determined based on the amount of stored energy of the zero-power device, the zero-power device supports energy storage, and in the case where the stored energy of the zero-power device is greater than a first threshold, the signal structure of the communication signal is the communication signal of the first type; in a case where the stored energy of the zero-power device is less than the first threshold, the signal structure of the communication signal is the communication signal of the second type; and in a case where the stored energy of the zero-power device is less than the first threshold and greater than a second threshold, as indicated by the signal structure of the communication signal, the communication signal includes a communication indication signal and a data transmission signal.

In some embodiments, the transmission mode is selected based on the energy situation of the zero-power device. For example, the transmission mode is determined based on the amount of stored energy of the zero-power device, the energy harvesting efficiency of the zero-power device, the feature of at least one of a power sourcing signal or an incoming signal, or the signal strength of at least one of a power sourcing signal or an incoming signal. The transmission mode includes at least one of backscattering, active transmission, or backscattering and active transmission.

Taking an example where the signal structure of the communication signal is determined based on the amount of stored energy of the zero-power device, the zero-power device supports energy storage, and in the case where the stored energy of the zero-power device is greater than a first threshold, the active transmission communication mode is adopted; in the case where the stored energy of the zero-power device is less than the first threshold, the backscatter communication mode is adopted; and in the case where the stored energy of the zero-power device is less than the first threshold and greater than a second threshold, the combined communication mode of backscattering and active transmission is adopted. For example, a communication indication signal is actively transmitted first, and then a data transmission signal is backscattered.

In some embodiments, if a semi-active or active zero-power device, i.e., a zero-power device supporting energy storage, supports both the backscatter communication mode and the active transmission communication mode, the semi-active or active zero-power device, when determining it is necessary to transmit a signal to the network device, determines the signal structure in each of the first, second and third solutions above and transmits the signal to the network device.

For example, for a zero-power device having energy greater than a threshold 1, i.e., a zero-power device capable of transmitting signal completely, the zero-power device adopts the active transmission communication mode to perform the signal transmission procedure in the first solution.

For another example, for a zero-power device having energy less than the threshold 1, i.e., a zero-power device incapable of transmitting signal completely, the zero-power device adopts the signal transmission mode in the second solution to transmit a communication request signal to the network device using the active transmission communication mode and wait for scheduling from the network device.

For another example, for a zero-power device having energy less than the threshold 1 but greater than a threshold 2, the zero-power device adopts the mode in the third solution to first transmit a communication indication signal using the active transmission communication mode and harvest and store energy at the same time and transmit a data transmission signal using the active transmission communication mode after a time interval T.

In summary, in the method according to the present embodiment, the zero-power device may select different signal structures of communication signals and different transmission modes based on the energy situation of the zero-power device itself to actively transmit the communication signal to the network device, such that the data transmission performance of the zero-power device is improved, the data transmission delay is reduced, and the collisions between different terminals in transmitting signals are reduced.

It should be noted that the above embodiments may be implemented individually or implemented in combination with each other, which is not limited in the embodiments of the present disclosure.

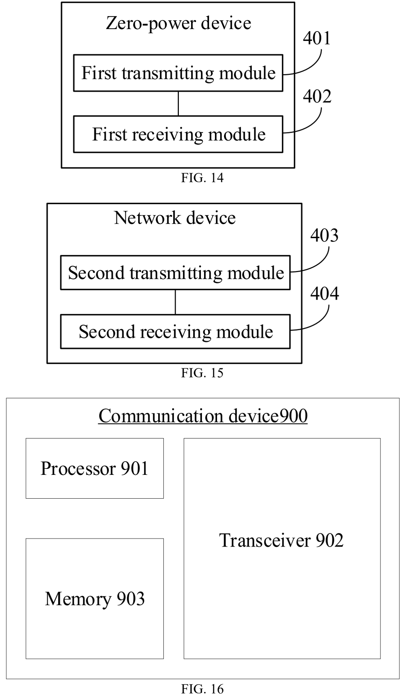

FIG. 14 illustrates a structural block diagram of an apparatus for zero-power communication according to some embodiments of the present disclosure. The apparatus may be implemented as a zero-power device or part of a zero-power device. The apparatus includes: a first transmitting module 401.

The first transmitting module 401 is configured to transmit a communication signal using a first transmission mode, wherein in the first transmission mode, communication is initiated by a zero-power device, and the communication signal includes identity information of the zero-power device.

In some embodiments, the first transmitting module 401 is configured to perform at least one of: periodically transmitting the communication signal using the first transmission mode; transmitting the communication signal using the first transmission mode in response to being triggered by a trigger event; or transmitting the communication signal using the first transmission mode in a case of performing a schedule-free communication.

In some embodiments, the communication signal includes a communication signal of a first type, wherein the communication signal of the first type at least includes: a field indicating identity information of the zero-power device; and a field indicating to-be-transmitted data information of the zero-power device.

In some embodiments, the communication signal of the first type further includes: a field indicating signal type identification information, wherein the signal type identification information identifies the first transmission mode, and/or the signal type identification information identifies a type and a signal structure of the communication signal.

In some embodiments, the communication signal includes a communication signal of a second type, wherein the communication signal of the second type is used to request scheduling from a network device, and the communication signal of the second type includes at least one of: a field indicating identity information of the zero-power device; a field indicating signal type identification information, wherein the signal type identification information identifies the first transmission mode, and/or the signal type identification information identifies a type and a signal structure of the communication signal; a field indicating communication indication information of the zero-power device, wherein the communication indication information indicates a type of to-be-transmitted data or a feature of to-be-transmitted data information; or a field indicating a time domain position where a scheduling signal of the network device is expected.

In some embodiments, the apparatus further includes: a first receiving module 402, configured to monitor the scheduling signal.

In some embodiments, the first transmitting module 401 is configured to transmit a communication signal of a first type using the first transmission mode in a case where no scheduling signal has been monitored; wherein the communication signal of the first type at least includes: a field indicating identity information of the zero-power device and a field indicating to-be-transmitted data information of the zero-power device.

In some embodiments, the first transmitting module 401 is configured to retransmit the communication signal of the second type using the first transmission mode in a case where no scheduling signal has been monitored; the first transmitting module 401 is configured to transmit a communication signal of a first type using the first transmission mode in a case where the number of retransmissions of the communication signal of the second type satisfies a threshold or no scheduling signal has been monitored within a predefined duration; wherein the communication signal of the first type at least includes: a field indicating identity information of the zero-power device and a field indicating to-be-transmitted data information of the zero-power device.

In some embodiments, the communication signal includes a communication signal of a third type, wherein the communication signal of the third type includes a communication indication signal and a data transmission signal; wherein the communication indication signal includes at least one of: a field indicating signal type indication information, a field indicating identity information of the zero-power device, a field indicating communication control information of the zero-power device, or a field indicating an association relationship between the communication indication signal and the data transmission signal; the data transmission signal is used to bear to-be-transmitted data information; wherein the communication control information indicates a transmission configuration for the data transmission signal, the signal type identification information identifies the first transmission mode, and/or the signal type identification information identifies a type and a signal structure of the communication signal; and.

In some embodiments, a time interval is present between transmission of the communication indication signal and transmission of the data transmission signal; wherein the time interval is determined based on network configuration, or the time interval is determined based on an agreement in a protocol, or the time interval is determined by the zero-power device.

In some embodiments, a guard period is present between different fields of the communication signal, or no guard period is present between different fields of the communication signal.

In some embodiments, different fields of the communication signal adopt a same coding scheme and/or a same modulation scheme; or different fields of the communication signal adopt different coding schemes and/or different modulation schemes.

In some embodiments, the communication signal is transmitted using a backscatter communication mode; or the communication signal is transmitted using an active transmission communication mode; or the communication signal is transmitted simultaneously using a backscatter communication mode and an active transmission communication mode.

In some embodiments, in the case where the communication signal is transmitted using the backscatter communication mode, a frequency domain resource for transmitting the communication signal includes at least one of: a frequency domain resource the same as a frequency domain resource of an incoming signal or a frequency domain resource acquired by performing a frequency offset on a frequency domain resource of an incoming signal;
in a case where the communication signal is transmitted using the active transmission communication mode, a frequency domain resource for transmitting the communication signal includes a frequency domain resource that is configured by a network or preconfigured;
in a case where the communication signal is transmitted simultaneously using the backscatter communication mode and the active transmission communication mode, a frequency domain resource for transmitting the communication signal by the backscattering includes at least one of: a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource configured by a network or preconfigured; or
in a case where the communication signal is transmitted simultaneously using the backscatter communication mode and the active transmission communication mode, a frequency domain resource for transmitting the communication signal by the active transmission includes at least one of: a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource configured that is by a network or preconfigured.

In some embodiments, the frequency domain resource for transmitting the communication signal includes one of: any position in a time domain; a time domain position indicated by network configuration; or a time domain position indicated by pre-configuration.

In some embodiments, a signal structure of the communication signal is determined based on an amount of stored energy of the zero-power device; or a signal structure of the communication signal is determined based on energy harvesting efficiency of the zero-power device; or a signal structure of the communication signal is determined based on a feature of at least one of a power sourcing signal or an incoming signal; or a signal structure of the communication signal is determined based on a signal strength of at least one of a power sourcing signal or an incoming signal; wherein the signal structure includes at least one of: the communication signal being a communication signal of a first type, the communication signal being a communication signal of a second type, or the communication signal including a communication indication signal and a data transmission signal.

In some embodiments, the zero-power device supports energy storage;
in a case where the stored energy of the zero-power device is greater than a first threshold, the signal structure of the communication signal is the communication signal of the first type;
in a case where the stored energy of the zero-power device is less than the first threshold, the signal structure of the communication signal is the communication signal of the second type;
in a case where the stored energy of the zero-power device is less than the first threshold and greater than a second threshold, the signal structure of the communication signal is the communication indication signal and the data transmission signal.

In some embodiments, the apparatus further includes: a first receiving module 402, configured to monitor a feedback signal; wherein the feedback signal includes at least one of: a field indicating identity information of the zero-power device or a field indicating a feature bit in the communication signal from the zero-power device.

In some embodiments, the first receiving module 402 is configured to monitor the feedback signal based on a time offset subsequent to transmitting the communication signal; wherein the time offset is indicated by the zero-power device to a network device, or the time offset is specified in a protocol, or the time offset corresponds to the identity information of the zero-power device, or the time offset is preconfigured by a network device.

In some embodiments, the first receiving module 402 is configured to monitor the feedback signal based on a time window; wherein
a window length of the time window is indicated by the zero-power device to a network device, or a window length of the time window is specified in a protocol, or a window length of the time window corresponds to the identity information of the zero-power device, or a window length of the time window is preconfigured by a network device; and
a start position of the time window is specified in a protocol, or a start position of the time window is preconfigured by the network device, or a start position of the time window is a position that is periodically distributed in a time domain, or a start position of the time window is indicated by the zero-power device to the network device.

In some optional embodiments, the first transmitting module 401 is configured to retransmit the communication signal using the first transmission mode in a case of no feedback signal being monitored.

FIG. 15 illustrates a structural block diagram of an apparatus for zero-power communication according to some embodiments of the present disclosure. The apparatus may be implemented as a network device or part of a network device. The apparatus includes: a second receiving module 404.

The second receiving module 404 is configured to receive a communication signal from a zero-power device, wherein the communication signal is transmitted by the zero-power device using a first transmission mode, and in the first transmission mode, communication is initiated by the zero-power device, and the communication signal includes identity information of the zero-power device.

In some embodiments, the second receiving module 404 is configured to perform at least one of: periodically receiving the communication signal from the zero-power device, wherein the communication signal is transmitted by the zero-power device using the first transmission mode; receiving the communication signal from the zero-power device, wherein the communication signal is transmitted by the zero-power device using the first transmission mode in response to being triggered by a trigger event; or receiving the communication signal from the zero-power device, wherein the communication signal is transmitted by the zero-power device using the first transmission mode in a case where a schedule-free communication is performed.

In some embodiments, the communication signal includes a communication signal of a first type, wherein the communication signal of the first type at least includes: a field indicating identity information of the zero-power device; and a field indicating to-be-transmitted data information of the zero-power device.

In some embodiments, the communication signal of the first type further includes: a field indicating signal type identification information, wherein the signal type identification information identifies the first transmission mode, and/or the signal type identification information identifies a type and a signal structure of the communication signal.

In some embodiments, the communication signal includes a communication signal of a second type, wherein the communication signal of the second type is used to request scheduling from a network device, and the communication signal of the second type includes at least one of: a field indicating identity information of the zero-power device; a field indicating signal type identification information, wherein the signal type identification information identifies the first transmission mode, and/or the signal type identification information identifies a type and a signal structure of the communication signal; a field indicating communication indication information of the zero-power device, wherein the communication indication information indicates a type of to-be-transmitted data or a feature of to-be-transmitted data information; or a field indicating a time domain position where a scheduling signal of the network device is expected.

In some embodiments, the apparatus further includes: a second transmitting module 403, configured to transmit the scheduling signal.

In some embodiments, the second receiving module 404 is configured to receive a communication signal of a first type, wherein the communication signal of the first type is transmitted by the zero-power device using the first transmission mode, and the communication signal of the first type is transmitted by the zero-power device in a case where no scheduling signal has been monitored; wherein the communication signal of the first type at least includes: a field indicating identity information of the zero-power device and a field indicating to-be-transmitted data information of the zero-power device.

In some embodiments, the second receiving module 404 is configured to receive a communication signal of a first type, wherein the communication signal of the first type is transmitted by the zero-power device using the first transmission mode, and the communication signal of the first type is transmitted by the zero-power device in the case where the number of retransmissions of the communication signal of the second type satisfies a threshold or no scheduling signal has been monitored within a predefined duration; and the communication signal of the first type at least includes: a field indicating identity information of the zero-power device and a field indicating to-be-transmitted data information of the zero-power device.

In some embodiments, the communication signal includes a communication signal of a third type, the communication signal of the third type including a communication indication signal and a data transmission signal; wherein
the communication indication signal includes at least one of: a field indicating signal type indication information, a field indicating identity information of the zero-power device, a field indicating communication control information of the zero-power device, or a field indicating an association relationship between the communication indication signal and the data transmission signal; and
the data transmission signal is used to bear to-be-transmitted data information;
wherein the communication control information indicates a transmission configuration for the data transmission signal, the signal type identification information identifies the first transmission mode, and/or the signal type identification information identifies a type and a signal structure of the communication signal.

In some embodiments, a time interval is present between transmission of the communication indication signal and transmission of the data transmission signal; wherein the time interval is determined based on network configuration, or the time interval is determined based on an agreement in a protocol, or the time interval is determined by the zero-power device.

In some embodiments, a guard period is present between different fields of the communication signal, or no guard period is present between different fields of the communication signal.

In some embodiments, different fields of the communication signal adopt a same coding scheme and/or a same modulation scheme; or different fields of the communication signal adopt different coding schemes and/or different modulation schemes.

In some embodiments, the communication signal is transmitted using a backscatter communication mode; or the communication signal is transmitted using an active transmission communication mode; or the communication signal is transmitted simultaneously using a backscatter communication mode and an active transmission communication mode.

In some embodiments, in a case where the communication signal is transmitted using the backscatter communication mode, a frequency domain resource for transmitting the communication signal includes at least one of: a frequency domain resource the same as a frequency domain resource of an incoming signal or a frequency domain resource acquired by performing a frequency offset on a frequency domain resource of an incoming signal;
in a case where the communication signal is transmitted using the active transmission communication mode, a frequency domain resource for transmitting the communication signal includes a frequency domain resource configured by a network or preconfigured;
in a case where the communication signal is transmitted simultaneously using the backscatter communication mode and the active transmission communication mode, a frequency domain resource for transmitting the communication signal by the backscattering includes at least one of: a frequency domain resource the same as a frequency domain resource of an incoming signal, a frequency domain resource acquired by performing a frequency offset on a frequency domain resource of an incoming signal, a frequency domain resource configured by a network or preconfigured, or a frequency domain resource acquired by performing a frequency offset on a frequency domain resource configured by a network or preconfigured; and
in a case where the communication signal is transmitted simultaneously using the backscatter communication mode and the active transmission communication mode, a frequency domain resource for transmitting the communication signal by the active transmission includes at least one of: a frequency domain resource the same as a frequency domain resource of an incoming signal, a frequency domain resource acquired by performing a frequency offset on a frequency domain resource of an incoming signal, a frequency domain resource configured by a network or preconfigured, or a frequency domain resource acquired by performing a frequency offset on a frequency domain resource configured by a network or preconfigured.

In some embodiments, the frequency domain resource for transmitting the communication signal includes one of: any position in a time domain; a time domain position indicated by network configuration; or a time domain position indicated by pre-configuration.

In some embodiments, a signal structure of the communication signal is determined based on an amount of stored energy of the zero-power device; or a signal structure of the communication signal is determined based on energy harvesting efficiency of the zero-power device; or a signal structure of the communication signal is determined based on a feature of at least one of a power sourcing signal or an incoming signal; or a signal structure of the communication signal is determined based on a signal strength of at least one of a power sourcing signal or an incoming signal; wherein the signal structure includes at least one of: the communication signal being a communication signal of a first type, the communication signal being a communication signal of a second type, or the communication signal including a communication indication signal and a data transmission signal.

In some embodiments, the zero-power device supports energy storage; in a case where the stored energy of the zero-power device is greater than a first threshold, the signal structure of the communication signal is the communication signal of the first type; in a case where the stored energy of the zero-power device is less than the first threshold, the signal structure of the communication signal is the communication signal of the second type; and in a case where the stored energy of the zero-power device is less than the first threshold and greater than a second threshold, the signal structure of the communication signal is the communication indication signal and the data transmission signal.

In some embodiments, the apparatus further includes: a second transmitting module 403, configured to transmit a feedback signal; wherein the feedback signal includes at least one of: a field indicating identity information of the zero-power device or a field indicating a feature bit in the communication signal from the zero-power device.

In some embodiments, the second transmitting module 403 is configured to transmit the feedback signal based on a time offset subsequent to receiving the communication signal; wherein the time offset is indicated by the zero-power device to the network device, or the time offset is specified in a protocol, or the time offset corresponds to the identity information of the zero-power device, or the time offset is preconfigured by the network device.

In some embodiments, the second transmitting module 403 is configured to transmit the feedback signal based on a time window; wherein
a window length of the time window is indicated by the zero-power device to the network device, or a window length of the time window is specified in a protocol, or a window length of the time window corresponds to the identity information of the zero-power device, or a window length of the time window is preconfigured by the network device; and
a start position of the time window is specified in a protocol, or a start position of the time window is preconfigured by the network device, or a start position of the time window is a position that is periodically distributed in a time domain, or a start position of the time window is indicated by the zero-power device to the network device.

In some embodiments, the apparatus further includes: a second receiving module 404, configured to receive the communication signal, wherein the communication signal is retransmitted by the zero-power device using the first transmission mode, and the retransmitted communication signal is transmitted by the zero-power device in a case where no feedback signal has been monitored.

FIG. 16 illustrates a schematic structural diagram of a communication device according to some embodiments of the present disclosure. The communication device 900 includes a processor 901, a transceiver 902, and a memory 903.

The processor 901 includes one or more processing cores. The processor 901 runs various functional applications by running software programs and modules.

The transceiver 902 may be configured to receive and transmit information. The transceiver 902 may be one communication chip.

The memory 903 may be configured to store at least one computer program. The processor 901 is configured to run the at least one computer program to perform the processes performed by the communication device in the above method embodiments.

In addition, the memory 903 may be implemented using any type of volatile or non-volatile storage device or a combination thereof. The volatile or non-volatile storage device includes but is not limited to: a random access memory (RAM), a read-only memory (ROM), an erasable programmable read-only memory (EPROM), an electrically erasable programmable read-only memory (EEPROM), a flash memory or other solid-state memory technologies, a compact disc read-only memory (CD-ROM), a digital video disc (DVD) or other optical storages, a tape cassette, a tape, a disk storage, or other magnetic storage devices.

The processor 901 and the transceiver 902 involved in the embodiments of the present disclosure may perform the processes performed by the zero-power device in any one of the above embodiments.

In some embodiments, the transceiver 902 is configured to transmit a communication signal using a first transmission mode, wherein in the first transmission mode, communication is initiated by a zero-power device, and the communication signal includes the identity information of the zero-power device.

The processor 901 and the transceiver 902 involved in the embodiments of the present disclosure may perform the processes performed by the network device in any one of the above embodiments.

In some embodiments, the transceiver 902 is configured to receive a communication signal from a zero-power device, wherein the communication signal is transmitted by the zero-power device using a first transmission mode, and in the first transmission mode, communication is initiated by the zero-power device, and the communication signal includes the identity information of the zero-power device.

Some embodiments of the present disclosure further provide a computer-readable storage medium. The computer-readable storage medium stores at least one instruction, at least one program, or a code set or instruction set, and the at least one instruction, the at least one program, or the code set or instruction set, when loaded and run by a processor, causes the processor to perform the method for zero-power communication according to each of the above embodiments.

Some embodiments of the present disclosure further provide a chip. The chip includes at least one programmable logic circuit and/or at least one program instruction. The chip, when running, is used to perform the method for zero-power communication described above.

Some embodiments of the present disclosure further provide a computer program product. The computer program product, when running in a processor of a computer device, causes the computer device to perform the method for zero-power communication described above.

A person of ordinary skill in the art will appreciate that all or part of the processes in the above embodiments may be completed by hardware or completed by relevant hardware instructed by a program. The program is stored in a computer-readable storage medium, which may be a ROM, a magnetic disk, an optical disk or the like.

It is understandable that the terms "system" and "network" herein are generally used interchangeably. The term "and/or" herein merely describes an association relationship between associated objects, indicating three types of relationships. For example, the phrase "A and/or B" means (A), (B), or (A and B). The character "/" herein generally represents an "or" relationship between the associated objects. It is further understandable that "indication" mentioned in the embodiments of the present disclosure may be a direct indication, an indirect indication, or an indication that an association relationship is present. For example, "A indicates B" may mean that A directly indicates B, for example, B may be obtained from A; or may mean that A indirectly indicates B, for example, A indicates C through which B may be obtained; or may mean an association relationship is present between A and B. It is further understandable that "corresponding" mentioned in the embodiments of the present disclosure indicates a direct or indirect corresponding relationship between two items, or an association relationship between the two items, or a relationship such as indicating and being indicated, configuring and being configured, or the like. It is further understandable that the term "predefined," "specified in a protocol," "predetermined" and "predefined rule" may be implemented by pre-storing a corresponding code, a corresponding table, or another method that may be used to indicate relevant information in a device (e.g., including a network device and a user equipment), and the specific implementation thereof is not limited in the present disclosure. For example, the term "predefined" may be "defined" in a protocol. It is further understandable that, in the embodiments of the present disclosure, the "protocol" may be a standard protocol in the field of communication, and for example, may include a long-term evolution (LTE) protocol, a new radio (NR) protocol, and a related protocol applicable to a future communication system, which is not limited in the present disclosure.

Described above are merely optional embodiments of the present disclosure and are not intended to limit the present disclosure. Any modifications, equivalent replacements, improvements, and the like made within the spirit and principles of the present disclosure shall fall within the protection scope of the present disclosure.

## Claims

1. A method for zero-power communication, applicable to a zero-power device, the method comprising:
transmitting a communication signal using a first transmission mode, wherein in the first transmission mode, communication is initiated by the zero-power device, and the communication signal comprises identity information of the zero-power device.

2. The method according to claim 1, wherein transmitting the communication signal using the first transmission mode comprises at least one of:
periodically transmitting the communication signal using the first transmission mode;
transmitting the communication signal using the first transmission mode in response to being triggered by a trigger event; or
transmitting the communication signal using the first transmission mode in a case of performing a schedule-free communication.

3. The method according to claim 1 or 2, wherein the communication signal comprises a communication signal of a first type, wherein the communication signal of the first type at least comprises:
a field indicating identity information of the zero-power device; and
a field indicating to-be-transmitted data information of the zero-power device.

4. The method according to claim 3, wherein the communication signal of the first type further comprises:
a field indicating signal type identification information, wherein the signal type identification information identifies the first transmission mode, and/or the signal type identification information identifies a type and a signal structure of the communication signal.

5. The method according to claim 1 or 2, wherein the communication signal comprises a communication signal of a second type, wherein the communication signal of the second type is used to request scheduling from a network device, and the communication signal of the second type comprises at least one of:
a field indicating identity information of the zero-power device;
a field indicating signal type identification information, wherein the signal type identification information identifies the first transmission mode, and/or the signal type identification information identifies a type and a signal structure of the communication signal;
a field indicating communication indication information of the zero-power device, wherein the communication indication information indicates a type of to-be-transmitted data or a feature of to-be-transmitted data information; or
a field indicating a time domain position where a scheduling signal from the network device is expected.

6. The method according to claim 5, further comprising:
monitoring the scheduling signal.

7. The method according to claim 6, further comprising:
transmitting a communication signal of a first type using the first transmission mode in a case where no scheduling signal has been monitored;
wherein the communication signal of the first type comprises at least: a field indicating identity information of the zero-power device and a field indicating to-be-transmitted data information of the zero-power device.

8. The method according to claim 6, further comprising:
retransmitting the communication signal of the second type using the first transmission mode in a case where no scheduling signal has been monitored; and
transmitting a communication signal of a first type using the first transmission mode in a case where a number of retransmissions of the communication signal of the second type satisfies a threshold or no scheduling signal has been monitored within a predefined duration;
wherein the communication signal of the first type at least comprises a field indicating identity information of the zero-power device and a field indicating to-be-transmitted data information of the zero-power device.

9. The method according to claim 1 or 2, wherein the communication signal comprises a communication signal of a third type, the communication signal of the third type comprising a communication indication signal and a data transmission signal; wherein
the communication indication signal comprises at least one of a field indicating signal type indication information, a field indicating identity information of the zero-power device, a field indicating communication control information of the zero-power device, or a field indicating an association relationship between the communication indication signal and the data transmission signal;
the data transmission signal is used to bear to-be-transmitted data information;
wherein the communication control information indicates a transmission configuration of the data transmission signal; signal type identification information identifies the first transmission mode, and/or the signal type identification information identifies a type and a signal structure of the communication signal.

10. The method according to claim 9, wherein a time interval is present between transmission of the communication indication signal and transmission of the data transmission signal;
wherein the time interval is determined based on network configuration, or the time interval is determined based on an agreement in a protocol, or the time interval is determined by the zero-power device.

11. The method according to any one of claims 3 to 10, wherein a guard period is present between different fields of the communication signal, or no guard period is present between different fields of the communication signal.

12. The method according to any one of claims 3 to 11, wherein
different fields of the communication signal adopt a same coding scheme and/or a same modulation scheme; or
different fields of the communication signal adopt different coding schemes and/or different modulation schemes.

13. The method according to any one of claims 1 to 12, wherein
the communication signal is transmitted using a backscatter communication mode; or
the communication signal is transmitted using an active transmission communication mode; or
the communication signal is transmitted simultaneously using a backscatter communication mode and an active transmission communication mode.

14. The method according to claim 13, wherein
in a case where the communication signal is transmitted using the backscatter communication mode, a frequency domain resource for transmitting the communication signal comprises at least one of a frequency domain resource the same as a frequency domain resource of an incoming signal or a frequency domain resource acquired by performing a frequency offset on a frequency domain resource of an incoming signal;
in a case where the communication signal is transmitted using the active transmission communication mode, a frequency domain resource for transmitting the communication signal comprises a frequency domain resource that is configured by a network or preconfigured;
in a case where the communication signal is transmitted simultaneously using the backscatter communication mode and the active transmission communication mode, a frequency domain resource for transmitting the communication signal by backscattering comprises at least one of a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource configured by a network or preconfigured; or
in a case where the communication signal is transmitted simultaneously using the backscatter communication mode and the active transmission communication mode, a frequency domain resource for transmitting the communication signal by active transmission comprises at least one of a frequency domain resource the same as a frequency domain resource of an incoming signal, a frequency domain resource acquired by performing a frequency offset on a frequency domain resource of an incoming signal, a frequency domain resource that is configured by a network or preconfigured, or a frequency domain resource acquired by performing a frequency offset on a frequency domain resource configured by a network or preconfigured.

15. The method according to any one of claims 1 to 14, wherein a time domain resource for transmitting the communication signal comprises one of:
any position in a time domain;
a time domain position indicated by network configuration; or
a time domain position indicated by pre-configuration.

16. The method according to any one of claims 1 to 14, wherein
a signal structure of the communication signal is determined based on an amount of stored energy of the zero-power device; or
a signal structure of the communication signal is determined based on energy harvesting efficiency of the zero-power device; or
a signal structure of the communication signal is determined based on a feature of at least one of a power sourcing signal or an incoming signal; or
a signal structure of the communication signal is determined based on a signal strength of at least one of a power sourcing signal or an incoming signal;
wherein the signal structure comprises at least one of: the communication signal being a communication signal of a first type, the communication signal being a communication signal of a second type, or the communication signal comprising a communication indication signal and a data transmission signal.

17. The method according to claim 16, wherein the zero-power device supports energy storage;
in a case where the stored energy of the zero-power device is greater than a first threshold, the signal structure of the communication signal is the communication signal of the first type;
in a case where the stored energy of the zero-power device is less than the first threshold, the signal structure of the communication signal is the communication signal of the second type;
in a case where the stored energy of the zero-power device is less than the first threshold and greater than a second threshold, the signal structure of the communication signal is the communication indication signal and the data transmission signal.

18. The method according to any one of claims 1 to 17, further comprising:
monitoring a feedback signal;
wherein the feedback signal comprises at least one of a field indicating identity information of the zero-power device or a field indicating a feature bit in the communication signal from the zero-power device.

19. The method according to claim 18, wherein monitoring the feedback signal comprises:
monitoring the feedback signal based on a time offset subsequent to transmitting the communication signal;
wherein the time offset is indicated by the zero-power device to a network device, or the time offset is specified in a protocol, or the time offset corresponds to the identity information of the zero-power device, or the time offset is preconfigured by a network device.

20. The method according to claim 18, wherein monitoring the feedback signal comprises:
monitoring the feedback signal based on a time window; wherein
a window length of the time window is indicated by the zero-power device to a network device, or a window length of the time window is specified in a protocol, or a window length of the time window corresponds to the identity information of the zero-power device, or a window length of the time window is preconfigured by a network device; and
a start position of the time window is specified in a protocol, or a start position of the time window is preconfigured by the network device, or a start position of the time window is a position that is periodically distributed in a time domain, or a start position of the time window is indicated by the zero-power device to the network device.

21. The method according to any one of claims 18 to 20, further comprising:
retransmitting the communication signal using the first transmission mode in a case where no feedback signal has been monitored.

22. A method for zero-power communication, applicable to a network device, the method comprising:
receiving a communication signal from a zero-power device, wherein the communication signal is transmitted by the zero-power device using a first transmission mode, and in the first transmission mode, communication is initiated by the zero-power device, and the communication signal comprises identity information of the zero-power device.

23. The method according to claim 22, wherein receiving the communication signal from the zero-power device comprises at least one of:
periodically receiving the communication signal from the zero-power device;
receiving the communication signal from the zero-power device in response to being triggered by a trigger event; or
receiving the communication signal from the zero-power device in a case where schedule-free communication is performed.

24. The method according to claim 22 or 23, wherein the communication signal comprises a communication signal of a first type, wherein the communication signal of the first type comprises at least:
a field indicating identity information of the zero-power device;
a field indicating to-be-transmitted data information of the zero-power device.

25. The method according to claim 24, wherein the communication signal of the first type further comprises:
a field indicating signal type identification information, wherein the signal type identification information identifies the first transmission mode, and/or the signal type identification information identifies a type and a signal structure of the communication signal.

26. The method according to claim 22 or 23, wherein the communication signal comprises a communication signal of a second type, wherein the communication signal of the second type is used to request scheduling from a network device, and the communication signal of the second type comprises at least one of:
a field indicating identity information of the zero-power device;
a field indicating signal type identification information, wherein the signal type identification information identifies the first transmission mode, and/or the signal type identification information identifies a type and a signal structure of the communication signal;
a field indicating communication indication information of the zero-power device, wherein the communication indication information indicates a type of to-be-transmitted data or a feature of to-be-transmitted data information; or
a field indicating a time domain position where a scheduling signal from the network device is expected.

27. The method according to claim 26, further comprising:
transmitting a scheduling signal.

28. The method according to claim 27, further comprising:
receiving a communication signal of a first type from the zero-power device, wherein the communication signal of the first type is transmitted by the zero-power device using the first transmission mode in a case where no scheduling signal has been monitored;
wherein the communication signal of the first type at least comprises a field indicating identity information of the zero-power device and a field indicating to-be-transmitted data information of the zero-power device.

29. The method according to claim 27, further comprising:
receiving a communication signal of a first type from the zero-power device, wherein the communication signal of the first type is transmitted by the zero-power device using the first transmission mode in a case where a number of retransmissions of the communication signal of the second type satisfies a threshold or no scheduling signal has been monitored within a predefined duration;
wherein the communication signal of the first type at least comprises a field indicating identity information of the zero-power device and a field indicating to-be-transmitted data information of the zero-power device.

30. The method according to claim 22 or 23, wherein the communication signal comprises a communication signal of a third type, the communication signal of the third type comprising a communication indication signal and a data transmission signal; wherein
the communication indication signal comprises at least one of: a field indicating signal type indication information, a field indicating identity information of the zero-power device, a field indicating communication control information of the zero-power device, or a field indicating an association relationship between the communication indication signal and the data transmission signal; and
the data transmission signal is used to bear to-be-transmitted data information;
wherein the communication control information indicates a transmission configuration of the data transmission signal, signal type identification information identifies the first transmission mode, and/or the signal type identification information identifies a type and a signal structure of the communication signal.

31. The method according to claim 30, wherein a time interval is present between transmission of the communication indication signal and transmission of the data transmission signal;
wherein the time interval is determined based on network configuration, or the time interval is determined based on an agreement in a protocol, or the time interval is determined by the zero-power device.

32. The method according to any one of claims 24 to 31, wherein a guard period is present between different fields of the communication signal, or no guard period is present between different fields of the communication signal.

33. The method according to any one of claims 24 to 32, wherein
different fields of the communication signal adopt a same coding scheme and/or a same modulation scheme; or
different fields of the communication signal adopt different coding schemes and/or different modulation schemes.

34. The method according to any one of claims 22 to 33, wherein
the communication signal is transmitted using a backscatter communication mode; or
the communication signal is transmitted using an active transmission communication mode; or
the communication signal is transmitted simultaneously using a backscatter communication mode and an active transmission communication mode.

35. The method according to claim 34, wherein
in a case where the communication signal is transmitted using the backscatter communication mode, a frequency domain resource for transmitting the communication signal comprises at least one of: a frequency domain resource the same as a frequency domain resource of an incoming signal or a frequency domain resource acquired by performing a frequency offset on a frequency domain resource of an incoming signal;
in a case where the communication signal is transmitted using the active transmission communication mode, a frequency domain resource for transmitting the communication signal comprises a frequency domain resource configured by a network or preconfigured;
in a case where the communication signal is transmitted simultaneously using the backscatter communication mode and the active transmission communication mode, a frequency domain resource for transmitting the communication signal by the backscattering comprises at least one of: a frequency domain resource the same as a frequency domain resource of an incoming signal, a frequency domain resource acquired by performing a frequency offset on a frequency domain resource of an incoming signal, a frequency domain resource configured by a network or preconfigured, or a frequency domain resource acquired by performing a frequency offset on a frequency domain resource configured by a network or preconfigured; and
in a case where the communication signal is transmitted simultaneously using the backscatter communication mode and the active transmission communication mode, a frequency domain resource for transmitting the communication signal by the active transmission comprises at least one of: a frequency domain resource the same as a frequency domain resource of an incoming signal, a frequency domain resource acquired by performing a frequency offset on a frequency domain resource of an incoming signal, a frequency domain resource configured by a network or preconfigured, or a frequency domain resource acquired by performing a frequency offset on a frequency domain resource configured by a network or preconfigured.

36. The method according to any one of claims 22 to 35, wherein the frequency domain resource for transmitting the communication signal comprises one of:
any position in a time domain;
a time domain position indicated by network configuration; or
a time domain position indicated by pre-configuration.

37. The method according to any one of claims 22 to 35, wherein
a signal structure of the communication signal is determined based on an amount of stored energy of the zero-power device; or
a signal structure of the communication signal is determined based on energy harvesting efficiency of the zero-power device; or
a signal structure of the communication signal is determined based on a feature of at least one of a power sourcing signal or an incoming signal; or
a signal structure of the communication signal is determined based on a signal strength of at least one of a power sourcing signal or an incoming signal;
wherein the signal structure comprises at least one of: the communication signal being a communication signal of a first type, the communication signal being a communication signal of a second type, or the communication signal comprising a communication indication signal and a data transmission signal.

38. The method according to claim 37, wherein the zero-power device supports energy storage;
in a case where the stored energy of the zero-power device is greater than a first threshold, the signal structure of the communication signal is the communication signal of the first type;
in a case where the stored energy of the zero-power device is less than the first threshold, the signal structure of the communication signal is the communication signal of the second type;
in a case where the stored energy of the zero-power device is less than the first threshold and greater than a second threshold, the signal structure of the communication signal is the communication indication signal and the data transmission signal.

39. The method according to any one of claims 22 to 38, further comprising:
transmitting a feedback signal;
wherein the feedback signal comprises at least one of: a field indicating identity information of the zero-power device or a field indicating a feature bit in the communication signal from the zero-power device.

40. The method according to claim 39, wherein transmitting the feedback signal comprises:
transmitting the feedback signal based on a time offset subsequent to receiving the communication signal;
wherein the time offset is indicated by the zero-power device to the network device, or the time offset is specified in a protocol, or the time offset corresponds to the identity information of the zero-power device, or the time offset is preconfigured by the network device.

41. The method according to claim 39, wherein transmitting the feedback signal comprises:
transmitting the feedback signal based on a time window; wherein
wherein a window length of the time window is indicated by the zero-power device to the network device, or a window length of the time window is specified in a protocol, or a window length of the time window corresponds to the identity information of the zero-power device, or a window length of the time window is preconfigured by the network device; and
a start position of the time window is specified in a protocol, or a start position of the time window is preconfigured by the network device, or a start position of the time window is a position that is periodically distributed in a time domain, or a start position of the time window is indicated by the zero-power device to the network device.

42. The method according to any one of claims 39 to 41, further comprising:
receiving the communication signal from the zero-power device, wherein the retransmitted communication signal is transmitted by the zero-power device using the first transmission node in a case where no feedback signal has been monitored.

43. An apparatus for zero-power communication, comprising:
a first transmitting module, configured to transmit a communication signal using a first transmission mode, wherein in the first transmission mode, communication is initiated by a zero-power device, and the communication signal comprises identity information of the zero-power device.

44. An apparatus for zero-power communication, comprising:
a second receiving module, configured to receive a communication signal from a zero-power device, wherein the communication signal is transmitted by the zero-power device using a first transmission mode, wherein in the first transmission mode, communication is initiated by the zero-power device, and the communication signal comprises identity information of the zero-power device.

45. A zero-power device, comprising a transceiver; wherein
the transceiver is configured to transmit a communication signal using a first transmission mode, wherein in the first transmission mode, communication is initiated by the zero-power device, and the communication signal comprises identity information of the zero-power device.

46. A network device, comprising: a transceiver; wherein
the transceiver is configured to receive a communication signal from a zero-power device, wherein the communication signal is transmitted by the zero-power device using a first transmission mode, wherein in the first transmission mode, communication is initiated by the zero-power device, and the communication signal comprises identity information of the zero-power device.

47. A computer-readable storage medium, storing at least one executable instruction therein, wherein the at least one executable instruction, when loaded and run by a processor, causes the processor to perform the method for zero-power communication as defined in any one of claims 1 to 42.

48. A chip, comprising at least one programmable logic circuit and/or at least one program instruction, wherein the chip, when running, is used to perform the method for zero-power communication as defined in any one of claims 1 to 42.

49. A computer program product, wherein the computer program product or a computer program comprises at least one computer instruction stored in a computer-readable storage medium; wherein a processor, when reading and executing the at least one computer instruction from the computer-readable storage medium, is caused to perform method for zero-power communication as defined in any one of claims 1 to 42.
